Europäisches Patentamt

European Patent Office

Office européen des brevets

(19)

(11) Veröffentlichungsnummer: **0 155 236**
**B1**

(12)

# EUROPÄISCHE PATENTSCHRIFT

(45) Veröffentlichungstag der Patentschrift:
12.07.89

(51) Int. Cl.⁴: **B 65 G 7/00,** B 62 D 57/02

(21) Anmeldenummer: **85810102.5**

(22) Anmeldetag: **06.03.85**

(54) Vorrichtung zum Verschieben von Kräften.

(30) Priorität: 12.03.84 CH 1210/84
12.06.84 CH 2819/84
24.10.84 CH 5082/84
28.11.84 CH 5664/84

(43) Veröffentlichungstag der Anmeldung:
18.09.85 Patentblatt 85/38

(45) Bekanntmachung des Hinweises auf die Patenterteilung:
12.07.89 Patentblatt 89/28

(84) Benannte Vertragsstaaten:
AT BE CH DE FR GB IT LI NL SE

(56) Entgegenhaltungen:
AT-A-233 099
DE-A-2 107 296
DE-A-2 405 343
DE-C-569 894
GB-A-778 664
GB-A-1 537 366
US-A-3 807 519
US-A-3 831 691

(73) Patentinhaber: HIRMANN, Georg, Griesernweg 14,
CH- 8037 Zürich (CH)

(72) Erfinder: HIRMANN, Georg, Griesernweg 14, CH-
8037 Zürich (CH)

(74) Vertreter: Troesch, Hans Alfred, Dr. Ing.,
Walchestrasse 19, CH- 8035 Zürich (CH)

EP 0 155 236 B1

**Beschreibung**

**Vorrichtung zum verschieben von Kräften**

Die vorliegende Erfindung betrifft eine Vorrichtung zum Verschieben von Kräften bezüglich einer zur Führung dienenden Auflagefläche, insbesondere von Lasten, bei welcher Vorrichtung eine zur Wirkungslinie der Kraft geneigte Fläche und ein Krafterzeuger vorgesehen sind, der eine zu dieser Fläche rechtwinklig wirkende Kraft erzeugt, woraus eine gegen die zu verschiebende Kraft wirkende und eine zur Auflagefläche parallele Kraftkomponente entstehen, wobei mit der geneigten Fläche ein erstes formbeständiges Verschiebelagerungs- und -führungselement wirkverbunden ist.

Die vorliegende Erfindung bezweckt ein vorteilhaftes Verschieben von Kräften, insbesondere von Lasten entgegen Reibungskräften.

In keiner der im folgenden erläuterten Vorveröffentlichungen ist diese Idee auch nur andeutungsweise offenbart oder nahegelegt.

Zum Stande der Technik gehört eine Vorrichtung zur Sperrung der Bewegung von Kraftübertragungsgliedern, welche eine Bewegung von zwei oder mehreren Kraftübertragungsgliedern gegeneinander erlaubt. Dabei wird die durch ein Kraftübertragungsglied hervorgerufene Sperrung infolge Reibung oder Klemmung eines Sperrgliedes an seinem Führungsteil durch die Wirkung eines oder mehrerer weiterer Kraftglieder aufgehoben. Diese Vorrichtung dient beispielsweise zur Beseitigung von Rückschlupf oder Todgang bei Zahnrädern, Vorschubspindeln, Spurlagern, Lagern u. dgl., also praktisch überall dort, wo ein Spiel zwischen sich bewegenden Gliedern auftritt.

Diese Vorrichtung (DE-A-569 894) ist für das Verschieben von Kräften im Sinne der vorliegenden Erfindung nicht geeignet, was schon der Zweck dieser vorbekannten Vorrichtung eindeutig zeigt, nämlich, dass sie dem Sperren der Bewegung von Kraftübertragungsgliedern dient.

Es ist eine weitere Einrichtung zur Umwandlung einer geradlinigen Bewegung in eine Drehbewegung bekannt geworden, wobei die Umwandlung der geradlinigen Bewegung eines drehbar gelagerten Antriebsteiles in die Drehbewegung mittels schräger Ablaufbahnen erfolgt. Das Ausmass der Drehbewegung ist bestimmt durch die Grösse der Achsialbewegung des Antriebsteiles und des Steigungswinkels der nach dem Prinzip der schiefen Ebene wirkenden Ablaufbahn. Diese Einrichtung arbeitet grundsätzlich im Sinne eines Klinkenrades, wobei durch eine äussere Kraftwirkung eine dazu senkrechte Bewegungsrichtung resultiert. Auch diese Einrichtung dient dazu über eine Keilfliche, beispielsweise eine horizontale Kraft dazu zu benützen, eine vertikale Kraft bzw. ein Gewicht zu heben und zu senken. Auch diese Vorveröffentlichung (OE-A-233 099) kann die vorliegende Aufgabe nicht lösen.

Im gleichen Sinne wie die vorbeschriebenen Vorrichtungen arbeitet ein hydraulisch betriebener Linearmotor, der mit einer Klemmeinrichtung für das lineare Bewegen eines Bandes, Streifens o. dgl. versehen ist und zwei gegenläufige Transportklemmen mit Aussparungen für das Band aufweist. Auch dieser Linearmotor ist nicht geeignet, und nicht dazu vorgesehen, die Aufgabe im Sinne der vorliegenden Erfindung zu lösen. Das gleiche gilt auch für die Vorveröffentlichung gemäss der FR-A-2 092 367.

Es ist ferner eine Vorrichtung zum Bewegen schwerer Körper bekannt geworden, bei welcher an zwei Zylinder/Kolben-Aggregaten, je eines vorne und eines hinten, eine Kulisse jeweils am einen Ende mitsamt dem zu bewegenden Körper gehoben wird. Dieser Körper, an einer Laufkatze befestigt, rollt während des Hochhebens auf der zur Horizontalen geneigten Ebene der Kulisse ab. Je nachdem, welcher Kolben gehoben wird, bewegt sich der Körper in der einen oder der entgegengesetzten Richtung.

Die Kolbenkräfte wirken entgegen dem Körpergewicht, d.h. nicht rechtwinklig zur schiefen Gleitbahn der Kulisse, so, dass, bedingt durch die Neigung zwischen Kulisse und Laufkatze, die Kolben eine nicht in ihrer Bewegungsrichtung weisende Komponente aufnehmen müssen und daher zusätzliche Reibungsverluste erleiden. Es muss, mit anderen Worten, jedes Kolben/Zylinder-Aggregat seitliche Führungen aufweisen.

Zudem wirken sich bei dieser Ausführung die zu bewegenden grossen Massen nachteilig aus. Daher eignet sich diese Vorrichtung nicht für hochfrequente Bewegungen. Mithin bleiben die erreichbaren Vorschubgeschwindigkeiten sehr klein. (GB-PS-778 664)

Bei einer sog. Selbsttransport-Trägeranordnung sind gegenüber der horizontalen Unterlage, auf schrägen Ebenen angeordnete aufblasbare Bälge vorgesehen, welche den zu bewegenden Körper bezüglich seinen Standflächen entlasten, jedoch von diesen nicht abheben können. Um ein gesteuertes Abheben sicherzustellen, benötigt es eine Vorspannung des Keils, welche auch dessen Rückholbewegung bewirken kann. Es kann dann dieser Körper mit den aufgepumpten Bälgen auf der schiefen Ebene abrollen und den Körper verschieben. Die dafür vorgesehene, aus flexiblem Material bestehende aufblasbare Zelle ist aber ungeeignet, da ein Abrollen, wie dieses vermeintlich stattfinden muss, durch die seitlichen Begrenzungen der aufgeblasenen Bälge verhindert wird. Daher ist diese Vorrichtung de facto in der dargestellten Art nicht funktionsfähig. (GB-PS-1 537 366)

Auch die US-PS-3 861 691 zeigt eine derartige Vorrichtung zum Verschieben grosser Lasten, insbesondere zum Verschieben von Flugzeugen. Die Bewegung der Last soll mittels einer Abrollbewegung aufgeblasener Zellen erfolgen, was aber in Folge der seitlichen Begrenzungswände der Zellen nicht möglich ist. Dazu bedürfte es einer kreiszylinderförmigen Zelle, welche sich wie ein starrer Körper verhalten müsste und abrollbar wäre. Bei dem dargestellten Querschnitt der Zellen ist das Abrollen daher nicht möglich, indem bei der Abrollbewegung die Seitenflächen bremsend deformiert werden. Eine solche Bewegung ist mit diesen Zellen höchstens bei sehr niedrigem Druck und äusserst kleinen Lasten und nur für sehr langsame Schritte bei sehr geringem volumetrischem Wirkungsgrad durchführbar.

Eine solche Zelle als Rollreibungsunterlage und nicht nur als Hubelement, wie bei der vorliegenden Erfindung zu verwenden, ist zumindest physikalisch äusserst fragwürdig. Zudem ist bei der dargestellten vorbekannten Ausführung ein Schwimmen der zu verschiebenden Last auf den aufgeblasenen Zellen nicht zu verhüten und daher eine entsprechende Führung, beispielsweise durch zusätzliche Gestänge, notwendig, um ein Abrutschen der Last in ungewollter Richtung zu vermeiden.

Die vorliegende Erfindung zeigt den Weg, wie diese Schwierigkeiten behoben Werden können.

Die erfindungsgemässe Vorrichtung zeichnet sich dadurch aus, dass ein zweites, direkt mit dem ersten zusammenwirkendes, formbeständiges Verschiebelagerungs- und -führungselement mit dem Krafterzeuger wirkverbunden ist.

Die Erfindung wird anschliessend beispielsweise anhand einer Zeichnung erläutert.

Es zeigen in rein schematischer Darstellung:

Fig. 1 einen Keil mit Hubmembranzelle zum Anheben der zu verschiebenden Last mit an der Lastschrägfläche montierter Membranzelle,

Fig. 2 eine Ausführung analog Fig. 1, mit an der Schrägfläche des Keiles montierter Membranzelle,

Fig. 3 die bei einer Ausführung analog Fig. 1 und 2 auftretenden Kräfte,

Fig. 4 einen Keilschubantrieb einer freiaufliegenden Last an einer steigenden Auflagefläche,

Fig. 5 eine Mehrfachanordnung der Keilschubelemente in einem Balken,

Fig. 6 eine Anordnung analog Fig. 5, jedoch für eine hin- und hergehende Vorschubewegung,

Fig. 7 eine Keilschubreihe in einer senkrechten Betonplatte, ausgebildet als Schutzraumtür,

Fig. 8 einen Schubkeilantrieb mit hydraulischer Betätigung durch einen Benützer,

Fig. 9 einen Schubkeilantrieb mit von aus sen betätigbarem Pumphebel zum Hebeschubvorgang,

Fig. 10 eine Anordnung mit einem veränderbaren Keilwinkel des Keiles und der Last,

Fig. 11 einen hydraulisch höhenverstellbaren Keilschubantrieb,

Fig. 12 einen Keilschubantrieb, kombiniert mit einer Verbrennungszelle als Druckmediumserzeuger,

Fig. 13 eine rein mechanische Ausführung eines Keilschubantriebes,

Fig. 14 eine Variante zu Fig. 13 mit Exzenterantrieb,

Fig. 15 einen schwingenden oder schlagenden Antrieb,

Fig. 16 ein Ausführungsbeispiel als Heftapparat,

Fig. 17 einen handbetätigten Antrieb,

Fig. 18 - 37 weitere Ausführungs-Anwendungsbeispiele der Erfindung,

Fig. 38 - 62 Ausführungsbeispiele von Antriebsvorrichtungen zur Umwandlung und/oder Übersetzung von Energieformen, nämlich:

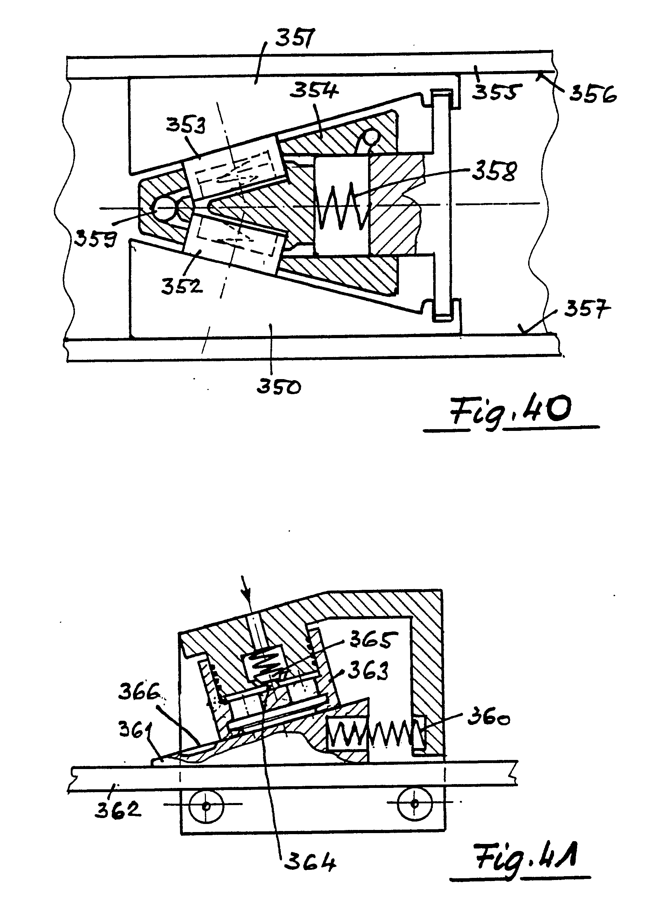

Fig. 38 einen Keilmotor mit Hohlkolben mit bistabiler pneumatischer Steuerung,

Fig. 39 einen Keilmotor als 2-Takt-Verbrennungsmotor,

Fig. 40 einen symmetrisch aufgebauten 2-Takt-Keilmotor,

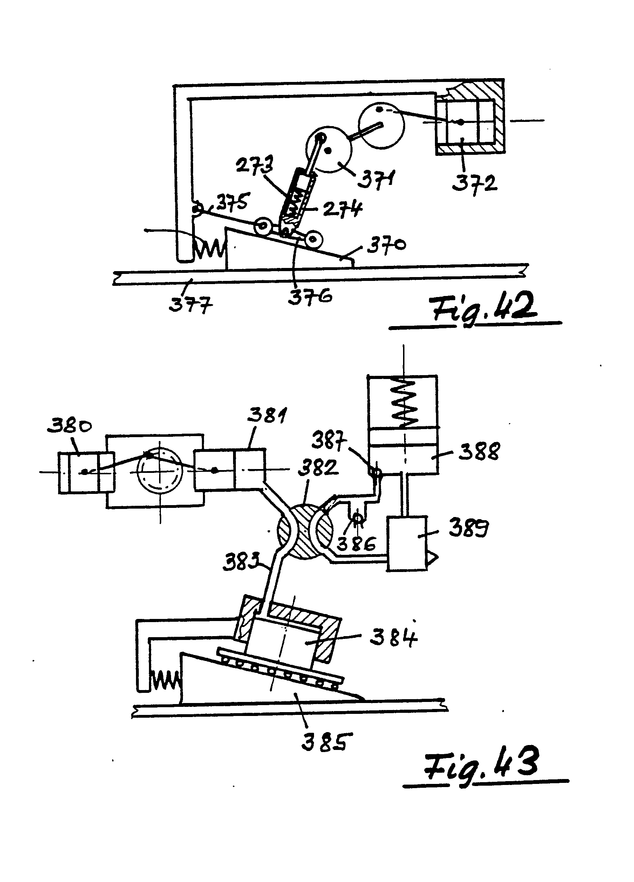

Fig. 41 einen Keilmotor für vorkomprimierte Gase,

Fig. 42 einen über Exzenter angetriebenen Keil,

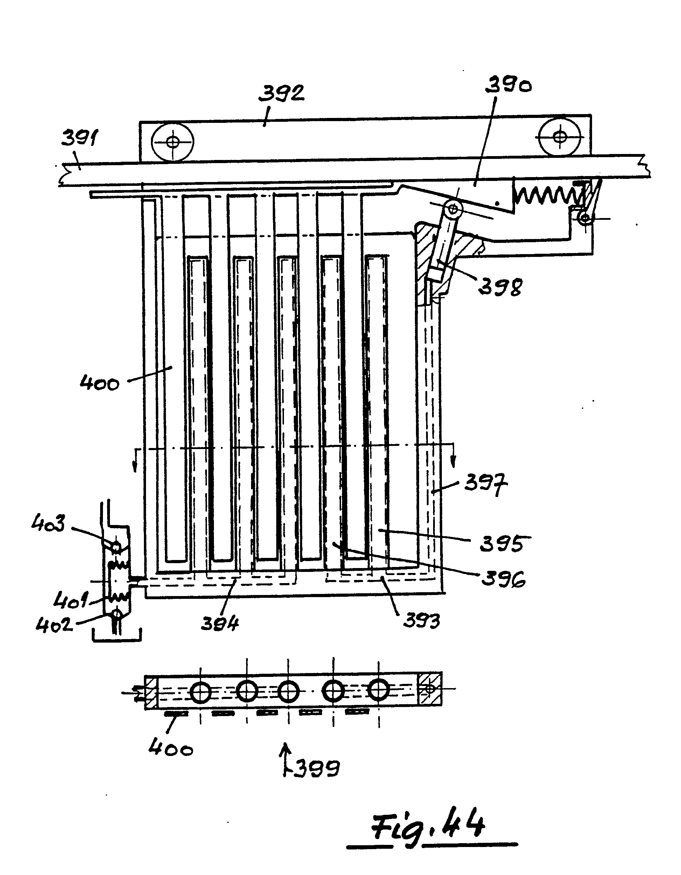

Fig. 43 einen pneumatisch angetriebenen Keil für zwei Betriebsarten,

Fig. 44 einen thermohydraulisch angetriebenen Keil,

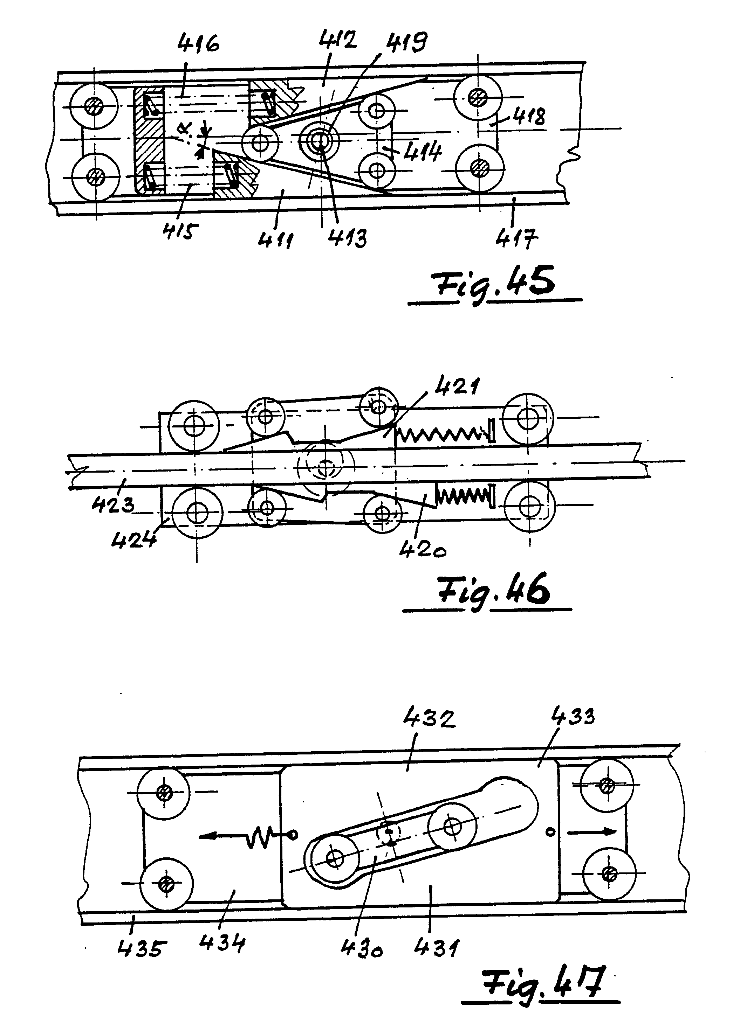

Fig. 45 einen mechanischen Antrieb von phasenverschoben wirkenden Keilen,

Fig. 46 einen mechanischen Antrieb von phasenverschoben wirkenden Keilen,

Fig. 47 einen reversierbaren mechanischen Keilantrieb,

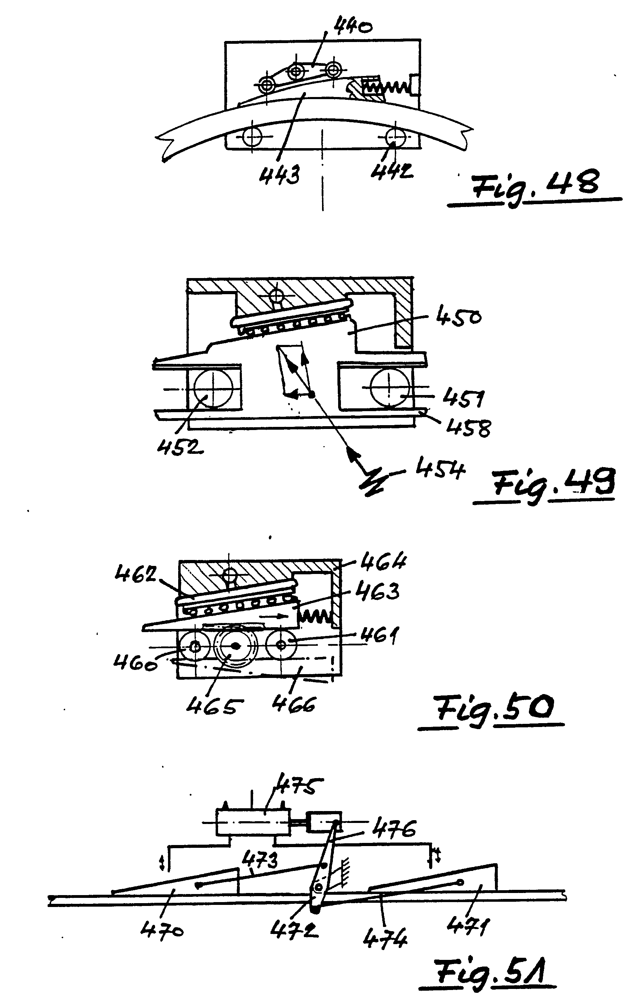

Fig. 48 einen Antrieb eines rotierenden Teiles mit gekrümmtem Keil,

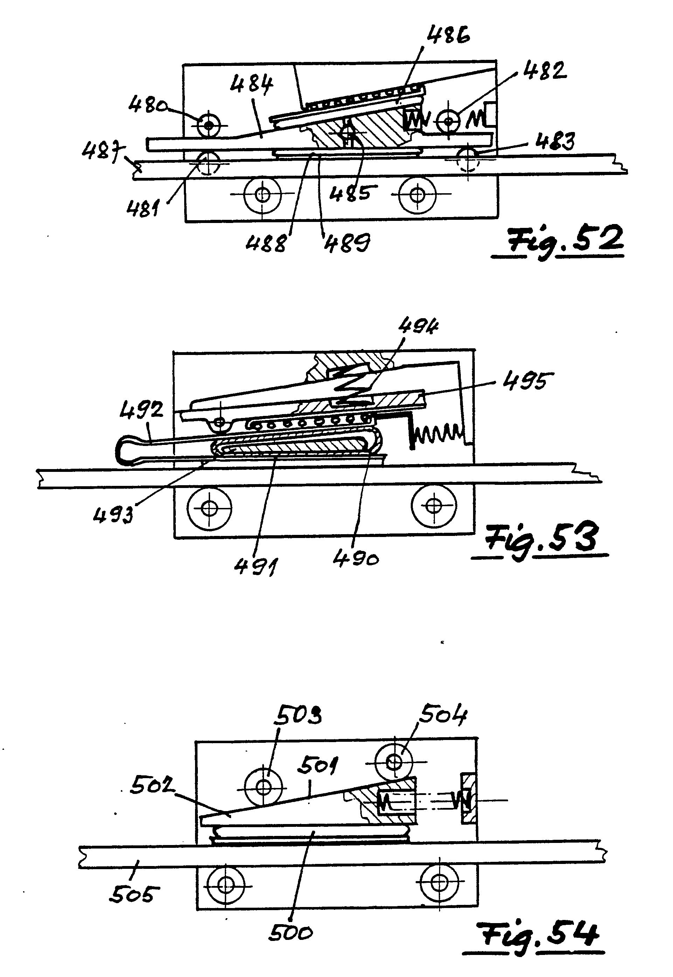

Fig. 49 einen Antrieb von rotierenden Teilen mit geringem Aussendurchmesser,

Fig. 50 eine Keilkoppelung mit Zahnrad,

Fig. 51 eine Synchron-Gegentaktkoppelung von zwei Keilen,

Fig. 52 eine Keilschubübertragung über Koppelzelle,

Fig. 53 eine keilförmige Krafterzeugerzelle,

Fig. 54 eine Koppelzelle für Antriebsfunktion,

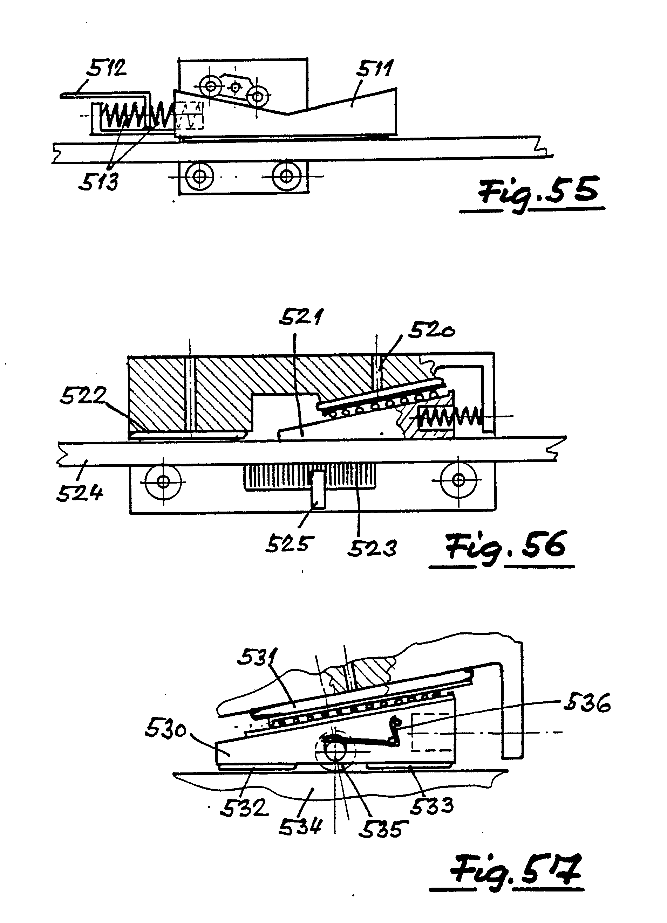

Fig. 55 einen mechanischen Keilantrieb mit Umsteuerung,

Fig. 56 einen Keilschub und Bremse,

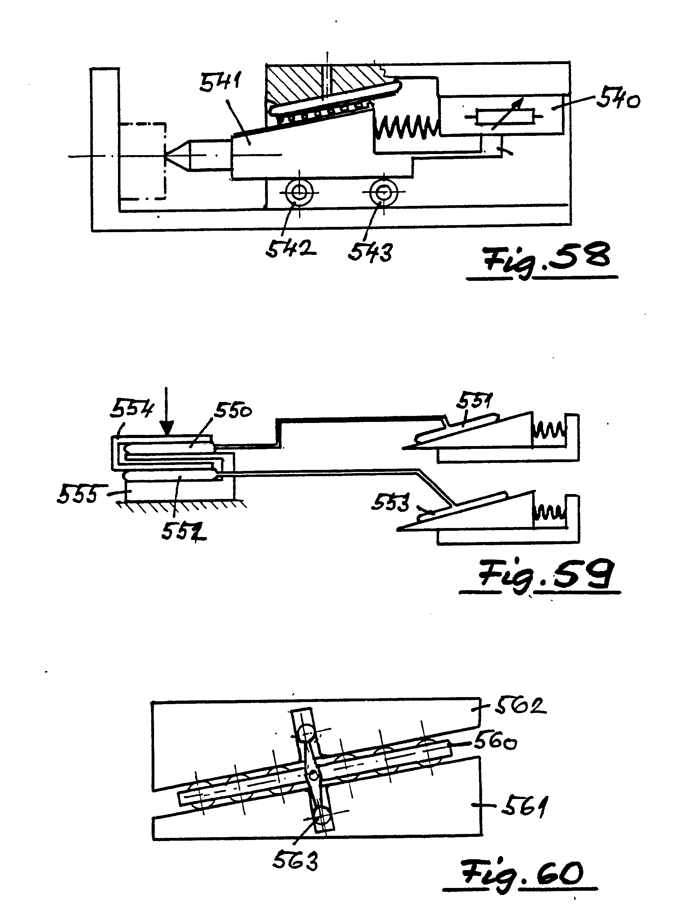

Fig. 57 die Rücklaufentlastung eines Keiles,

Fig. 58 einen Keilantrieb mit Signalgeber,

Fig. 59 eine volumenproportionale Synchronbetätigung mehrerer Kelle,

Fig. 60 die Führung einer Rollagerung durch Hebel,

Fig. 61 die Führung einer Rollagerung durch Zahnrad,

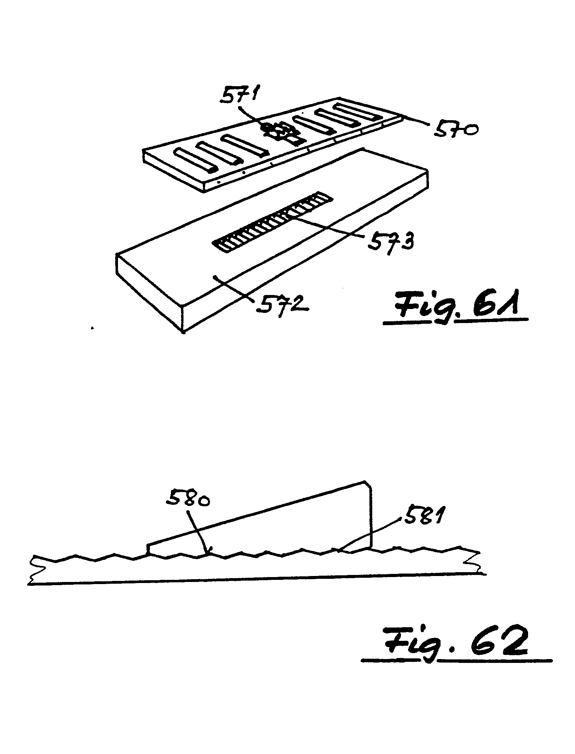

Fig. 62 eine Keilform für formschlüssige Koppelung der Schubkraft.

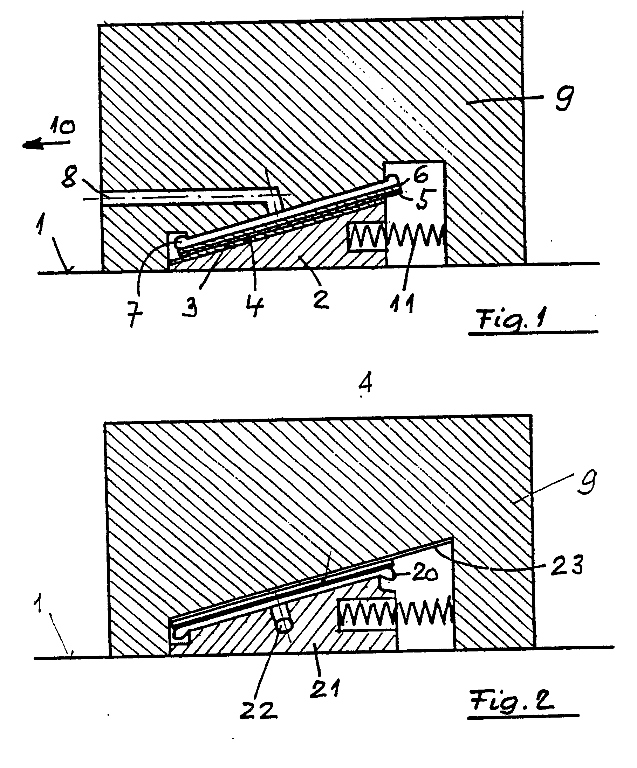

Fig. 1 zeigt einen am Boden 1 anliegenden Schubkeil 2 aus einem festen Stoff, wie Beton, Holz, Kunststoff, Stahlguss o.ä., mit einer glatten Oberfläche 3 als Gleitlagerfläche. Um den Keil 2 aus billigem Stoff herstellen zu können, kann die Gleitlagerfläche 3 beispielsweise aus poliertem rostfreiem Blech 4 auf die Keilschrägfläche aufgelegt und am Keil 2 fortschlüssig oder angeklebt befestigt werden.

Die Gegenseite der Gleitlagerfläche bildet eine vorzugsweise aus Teflon oder ähnlichem Stoff hergestellte Platte 5, welche über eine Zwischenlage 6 den in eine Membranzelle 7 über einen Kanal 8 geleiteten Mediumdruck überträgt. Während der Zuführung des flüssigen oder gasförmigen Druckmediums wird die Spreizkraft der Membranzelle 7 gegen eine Last 9 so lange erhöht, bis diese auf der geneigten Keilebene in Richtung 10 zu rutschen beginnt. Die weitere Zuführung von Druckmedium bewirkt eine weitere Verschiebung der Last 9, so lange die Relativbewegung zwischen Keil 2 und Last 9 abmessungsbedingt stattfinden kann. Die Wiederholung dieses Lastvorschubes kann nach dem Entlasten der Membranzelle 7 - es kann auch ein Krafterzeuger anderer Art sein - und der Rückstellung des entlasteten Keiles 2, beispielsweise durch eine Feder 11, erfolgen.

Fig. 2 zeigt eine Fig. 1 ähnliche Einrichtung, bei der jedoch eine Kraftzelle 20 an einem Keil 21 montiert und über eine Leitung 22 gespiesen wird An der Lastseite befindet sich lediglich eine gleitflächen-bildende Platte 23.

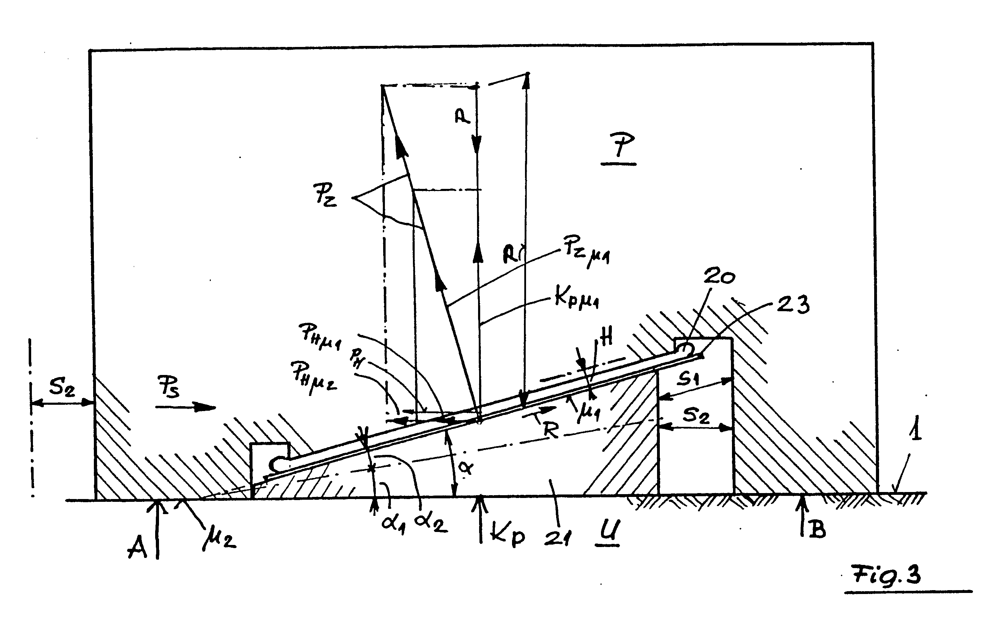

Fig. 3 zeigt die bei einem derartigen Keilschubvorgang von Lasten entstehenden Kräfte in rein statischer Betrachtung.

Die Aufgabe besteht darin, die Last P auf ihrer Unterlage U horizontal mittels einer Vorrichtung, z.B. gemäss Fig. 2, zu verschieben, in der in Fig. 3 ersichtlichen Ruhelage, in welcher der Schubkeil 21 mit der Membranzelle 20 die gleitflächen-bildende Platte 23 kraftlos berührt, gegebenenfalls nicht berührt. Ist P das Gesamtgewicht des zu verschiebenden Objektes, so ergeben sich die beiden Auflagekräfte $A_o$ und $B_o$ aus der Beziehung

1) $P - A_o - B_o = 0$.

Wenn der Schwerpunkt der Last P sich in der Mitte zwischen den beiden Auflagepunkten der Kräfte $A_o$ und $B_o$ befindet, so gilt:

2) $A_o = B_o = P/2$.

Nun erfolgt die Zuführung von Druckluft zur Membranzelle 20 so lange, bis diese an der gleitflächenbildenden Platte 23 anliegt, ohne indessen auf letztere eine Kraft auszuüben. Bis zu diesem Zeitpunkt bleiben die Gleichungen 1) und 2) gültig.

Wenn nun weiteres Druckmedium in die Membranzelle 20 eingebracht wird, so bewirkt dies eine zur Plattenfläche senkrechte Kraft $P_Z$, welche über die Platte 23 auf den zu verschiebenden Körper wirkt. In der klassischen Mechanik führt dieser dreifach gelagerte Balken auf ein statisch unbestimmtes Problem (Gerberträger) Diese Kraft $P_Z$ hat eine senkrecht wirkende Komponente von der Grösse

3) $P_Z \cdot \cos\alpha = K_P$

und eine horizontale Komponente

4) $PH = PZ \cdot \sin\alpha$

Durch diesen Vorgang werden $A_o$ und $B_o$ kleiner, da nun gilt, mit $A_o \rightarrow A$ und $B_o \rightarrow B$:

5) $P - A - B - K_P = 0$.

Die Horizontalkomponente $P_H$ hat vorläufig keine Folge, da, abgesehen von den Reibungskräften an den Auflagestellen zu A und B, deren Grösse von der Gewichtsverteilung, d.h. dem Anteil von P auf A und B abhängt (Gleichung 5) die Zellenkraft $P_Z$ eine Reibungskraft bzw. einen Reibungswiderstand von der Grösse

6) $R = P_Z \cdot \mu_1$,

bewirkt, wobei $\mu_1$ den Reibungskoeffizienten an der Platte 23 bezeichnet, welcher definitionsgemäss dem Wert von $\tan\alpha_1$ entspricht, wobei $\alpha_1$ den sog. Selbsthemmwinkel bezeichnet.

Die horizontale Komponente dieses Reibungswiderstandes beträgt

7) $R_H = R \cdot \cos\alpha = P_Z \cdot \mu_1 \cdot \cos\alpha$.

Dabei ist immer noch

8) $P_H < R_H$ und daher bewegt sich die zu verschiebende Last P nicht.

Wenn nun die Membranzelle 20 weiter beaufschlagt wird, so wird $P_Z$ immer grösser, ebenso nach Gleichung 3) $K_P$. Nach Gleichung 5) werden die Auflagekräfte A und B immer kleiner. Erreicht dann die Zellenkraft $P_Z$ einen ersten kritischen Wert $P_Z\mu_1$, entsteht aus dieser Kraft die Horizontalkomponente $P_H\mu_1$ im Sinne der Gleichung 4) nämlich

9) $P_Z\mu_1 \cdot \sin\varphi = P_H\mu_1$,

wenn die Horizontalkraft $P_H\mu_1$ der Horizontalkomponente des Reibungswiderstandes $R_H$ im Sinne von Gleichung 10) das Gleichgewicht hält

10) $P_H\mu_1 = P_Z\mu_1 \cdot \cos\alpha \cdot \mu_1$

so ist die Gleichgewichtslage bezüglich Selbsthemmung erreicht. Das Gewicht P wird aber immer noch nicht verschoben, da die weiteren Reibungskräfte an den Auflage stellen, nämlich die Kräfte

11) $A \cdot \mu_2 + B \cdot \mu_2 = P_S$

noch zu überwinden sind.

Durch weiteres Zuführen des Druckmediums in die Zelle 20 wird gemäss Gleichung 5) die Kraft $K_P$ wachsen und die beiden Auflagekräfte A, B abnehmen. Es kommt damit der Moment eines Grenzgleichgewichtszustandes, in welchem sich alle horizontalen Kräfte bzw. Kraftkomponenten das Gleichgewicht halten. Es gilt dann die Beziehung

12) $P_H = P_H\mu_1 + P_H\mu_2 = P_Z\mu_1 \cdot \cos\alpha + (A+B)\mu_2$.

Wenn nun durch Weiteraufpumpen der Zelle 20 die Kraft $K_P$ weiterwächst und die Kräfte A und B abnehmen, so ergibt sich die Ungleichung

13) $P_H > P_Z\mu_1 \cdot \cos\alpha + (A+B)\mu_2$.

Dies ist der Augenblick, wo die Last P auf dem Keil 21 und der horizontalen Auflagefläche U nach links zu rutschen beginnt. Dieser Bewegungszustand gemäss Gleichung 13) wird dadurch aufrecht erhalten, dass unter Beibehaltung der Lage des Keiles 21 die Membranzelle 20 weiter so gespiesen wird, dass die Kraft $P_Z$ gemäss Gleichung 13) aufrecht erhalten bleibt, so dass die Last P vom Keil 21 abgleitet, bis die geometrischen Abmessungen den Vorgang beenden.

Wenn dies der Fall ist, wird das Druckmedium aus der Membranzelle 20 ausströmen und der Keil 21 kann links wiederum unter die verschobene Last P gebracht werden. Der Vorgang beginnt von neuem. Auf diese Weise ist es möglich, schrittweise die Last P mit geringen Kräften entgegen der Reibung auf einer normalen Unterlage zu verschieben.

Die während eines Zyklus durchgeführte Arbeit beträgt, wenn die Zelle 20 während des Zyklus eine Arbeitshöhe von H ausführt

14) ARBEIT $= P_Z \cdot H = (A+B)\mu_2 \cdot S_2 + P_Z \cdot \mu_1 \cdot S_2/\cos\alpha$,

wenn die totale horizontale Verschiebungsstrecke $S_2$ ist. Dabei beträgt die Verschiebestrecke längs des Keiles $S_1 = S_2/\cos\alpha$.

Die Gleichung 14) zeigt, dass bei gegebener Verschiebung $S_2$ die Verschiebearbeit minimal wird, wenn

15) $(A+B) \cdot \mu_2 + \frac{P_Z \cdot X \cdot \mu_2}{\cos\alpha}$ ein Minimum ist,

mit $\mu_1 = X \cdot \mu_2$. Durch Umwandlung dieses Ausdruckes ergibt sich die Bedingung

16) $P \cdot \mu_2 - P_Z \cdot \cos\alpha \cdot \mu_2 + (P_Z/\cos\alpha) \cdot X \cdot \mu_2$

soll minimal sein. Dies ist der Fall, wenn bei gegebenem $\mu_2$ X und damit $\mu_1$ klein, d.h. $\mu_1 \ll \mu_2$ wird. Aus der Beziehung, die aus der Umformung aus 16) folgt

17) $(P_Z - P_Z \cdot \cos^2\alpha)/\cos\alpha$

minimal, was der Fall ist, wenn der Winkel $\alpha$ klein ist. Er muss aber stets grösser bleiben als der Selbsthemmwinkel $\alpha_1$.

Der Keilwinkel $\alpha$ wird konstruktiv so bestimmt, dass, wie soeben gezeigt, oberhalb der Selbsthemmung ($\mu_1 = tg\alpha_1$) ein möglichst kleiner aktiver Keilwinkelteil $\alpha_2$ besteht. Dann ist der Gesamtwinkel $\alpha = \alpha_1 + \alpha_2$. Die aus der Last sich ergebende Kraft P kann den beiden Winkelteilen $\alpha_1$, $\alpha_2$ entsprechend und damit den Reibungskräften entsprechend unterteilt werden. Es wird angenommen, dass ein fiktiver Reibungskoeffizient $\mu_3 = f(\mu_1, \mu_2)$ existiert und dass beim Keil der Winkel $\alpha$ dem Selbsthemmungswinkel von P entspricht. Es ist der Reibungswiderstand bei Selbsthemmung jeweils proportional zu $\mu_3$ bzw. $\mu_1$.

Die Selbsthemmungskraft P ist daher proportional dem $tg\alpha$ bzw. $\mu_3$. Es wird somit, da die Winkel klein sind,

$\frac{K_P\mu}{P} \sim \frac{\mu_1}{\mu_3} \sim \frac{\sin\alpha_1}{\cos\alpha_1} \cdot \frac{\cos\alpha}{\sin\alpha} \sim \frac{\sin\alpha_1}{\sin\alpha} \sim \frac{\alpha_1}{\alpha}$ und

18) $K_{P\mu_1} \sim P \cdot \frac{\alpha_1}{\alpha}$

als die zur Überwindung der Selbsthemmung $\mu_1$ notwendige Kraft. Es bleibt dann für die restliche Hubkraft der Wert $P - K_{P\mu_1}$.

Die entsprechend dem Gesamtwinkel des Keiles entstehende maximalmögliche Schubkraft wird dann

19) $P_{Hmax} = P \cdot \alpha tg.$

Daraus ergibt sich der durch Selbsthemmung verbrauchbare Kraftteil

20) $P_{H\mu_1} = P_{Hmax} \cdot \frac{\alpha_1}{\alpha}$

und die maximal-mögliche aktive Schubkraft

21) $P_{H\mu_2} = P_{Hmax} - P_{H\mu_1}$

Aus diesem Zusammenhang wird deutlich, dass der theoretische Gleitbeginn am Keil bei einer Zellenkraft von

$P_Z < \frac{P}{\cos\alpha}$

beginnt, denn für $P_Z = \frac{P}{\cos\alpha}$ wäre A = B = 0, und $P_S$ = 0, was kaum der Fall sein dürfte.

Im Zustand des theoretischen Gleitbeginns erfolgt eine teilweise Verlagerung der Last P auf den Keil 21, der Anteil $P - K_{P\mu_1}$ ruht aber an den Neben-Auflageflächen (Kräfte A und B). Aus diesem Grunde erfolgt der Schritt erst nach der weiteren Verlagerung der Last P auf den Keil 21, bis die momentane Grösse der aktiven Schubkraft $P_{H\mu_2}$ den sich gleichzeitig stets verkleinernden Reibungswiderstand $P_S$ übersteigt.

Auf die vorgehend abgeleitete Art kann durch die Grösse des aktiven Winkels $\alpha_2$ die Maximalgrösse der aktiven Schubkraft $P_{H\mu_2}$ und die Vorbestimmung des maximalen Reibungswiderstandes $P_S$ erfolgen.

Die beim Schrittbeginn erreichte Grösse ergibt sich aus dem Verhältnis der Reibungskoeffizienten an der Keillagerung $\mu_1$ und bei der Lastauflage $\mu_2$:

Sofern $\mu_1 = \mu_2$, so gleitet die Last bei $P_{HS} = \frac{P_{H\mu_2}}{2}$

Ist dagegen $\mu_1 < \mu_2$, so erfolgt ein weiteres Anheben der Last und eine Abnahme von A und B.

Das Anheben der Last P geschieht offensichtlich nur in der Grössenordnung der Oberflächenrauhheit, also praktisch hublos. Die Länge eines Schrittes $S_2$ ergibt sich aus dem Hub H der Kraftzelle sowie des Keiles $\mu_1$ und dessen Winkel $\alpha$. Die Steuerung der zugeführten Druckmediummenge bestimmt die Schrittgeschwindigkeit und die erreichbare Schrittfrequenz.

Wenn es sich um den Schrittantrieb einer freiaufliegenden Last P handelt, so sind die Winkelwerte stets auf die waagrechte Ebene zu beziehen, bei geführten Vorschubewegungen (allgemeine Kraftvektoren) dagegen auf die jeweilige Bewegungsrichtung.

Zahlenbeispiel: Es ist eine Schutzraumtüre vom Gewicht P = 30'000 kp aus Beton um 5 m horizontal auf ihrer Unterlage, ebenfalls aus Beton, zu verschieben. Es werden folgende Werte zugrunde gelegt:

$\mu_1 = 0,15$; $\alpha_1 = 8,63°$; $\alpha_2 = 4,0°$; $\alpha = 12,63°$.

Es wird dann die Überwindung der Selbsthemmung erreicht, wenn die Hubkraft nach Gleichung 18)

$K_{P\mu_1} = P \cdot \frac{\alpha_1}{\alpha} = 30'000 \cdot \frac{8,63}{12,63} = 20'496$ kp

beträgt. Die Schubkraft wird nach Gleichung 20)

$P_{H\mu_1} = P \cdot tg\alpha \cdot \frac{\alpha_1}{\alpha} = 30'000 \cdot 0,22 \cdot \frac{8,63}{12,63} = 4'594$ kp

und die Zellenkraft

$P_Z < \frac{P_{H\mu_1}}{\sin\alpha} = \frac{P \cdot tg\alpha \cdot \alpha_1}{\sin\alpha \cdot \alpha} = P \cdot \frac{\alpha_1}{\alpha \cdot \cos\alpha} = 21'004$ kp.

Das Schritt/Hub-Verhältnis

$C = \frac{1}{tg\alpha} = 4,56$

Zahlenhub H = 3 cm. Die Hubarbeit im Bereich $K_{P\mu_1}$ entspricht nach Gleichung 14)

6

$Ar\mu_1 = P_Z \cdot H = 63'013$ cmkp

Schrittlänge: $S_2 = H \cdot C = 3 \cdot 4,56 = 13,68$ cm.

Bei einer Verschiebungslänge $S_3 = 5$ m $= 500$ cm

Anzahl der Schritte: $i = \frac{S_3}{S_2} = 36,5$

Die totale mechanische Arbeit im Bereich $K_P\mu_1$

$Ar\mu_2 = Ar\mu_1 \cdot i = 2'299'938$ cmkp $\sim 30'000$ mkp

Beim Vergleich zum konventionellen Verschieben des Lastanteiles $K_P\mu_1$ und bei einem $\mu_2 = 0,5$ bei Beton auf Beton würde man mindestens ein

$P_H = 20'496 \cdot 0,5 = 10'248$ kp benötigen,

woraus sich eine notwendige Arbeit

$Ar_1 = 5 \cdot 10'248 = 51'240$ mkp ergibt.

Abgesehen davon, dass eine Lagerung Beton auf Beton für den Normalfall kaum denkbar wäre, besteht bereits in diesem Lastbereich eine Arbeitsersparnis von mindestens

$\Delta Ar = 51'240 - 30'000 = 21'240$ mkp

Im Bereich A + B ergibt sich:

$A + B = P - K_P\mu_1 = -30'000 - 20'496 = 9504$ kp

Die maximal mögliche Schubkraft

$P_H\mu_2 = P \cdot tg\alpha - P_H\mu_1 = 6'600$ kp

Die maximal notwendige Schubkraft:

$P_H\mu_2 = (A + B) \cdot \mu_2 = 9'504 \cdot 0,5 = 4'752$ kp

Die maximal notwendige Arbeit im Bereich A + B für 5 m Verschiebungslänge:

$Ar_2 = P_H\mu_2 \cdot S_3 = 4'752 \cdot 5 = 23'760$ mkp

Aus den vorgehenden Daten ergibt sich für Keilschub:

$\Sigma Ar_{max} = 30'000 + 23'760 = 53,760$ mkp

Im Gegensatz zum konventionellen Verschieben:

$Ar = P \cdot \mu_3 \cdot S_3 = 30'000 \cdot 0,5 \cdot 5 = 75'000$ mkp.

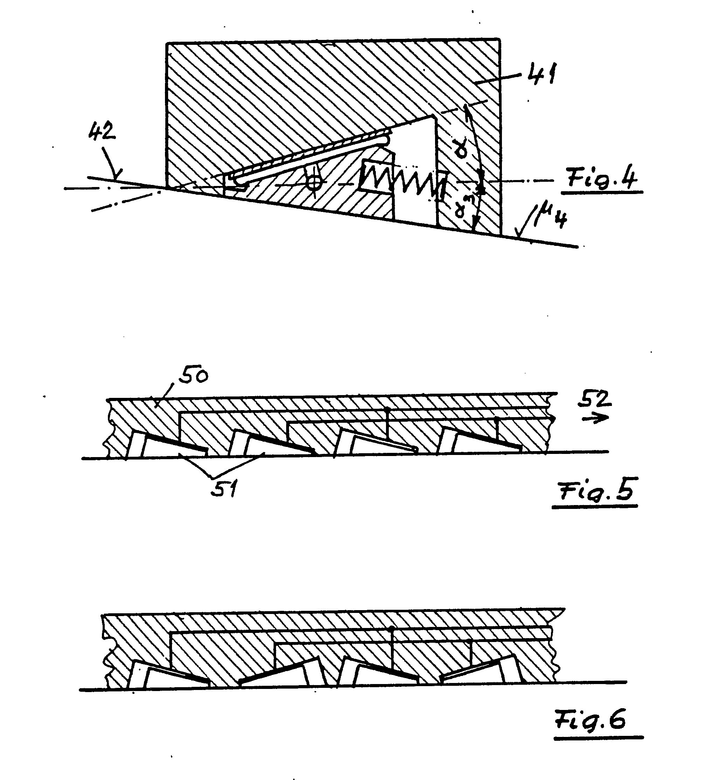

Fig. 4 zeigt einen Keilschubantrieb 40 einer freiaufliegenden Last 41, an einer steigenden Lauffläche 42, bei dem die Keilwinkel $\alpha$ oberhalb der waagrechten Ebene, wie bei Fig. 3 besprochen, konstruiert werden müssen. Der Steigungswinkel des unteren Keiles $\alpha_3$ wird durch den Reibungskoeffizient $\mu_4$ limitiert. Es muss ($tg\alpha$ + $tg\alpha_3$) < $\mu_4$ sein, wobei nach Bedarf die Oberflächenrauhheit erhöht werden kann, was z. B. durch formschlüssige Profilierung möglich ist. Dies ergibt einen grösseren Reibungsbeiwert $\mu_4$.

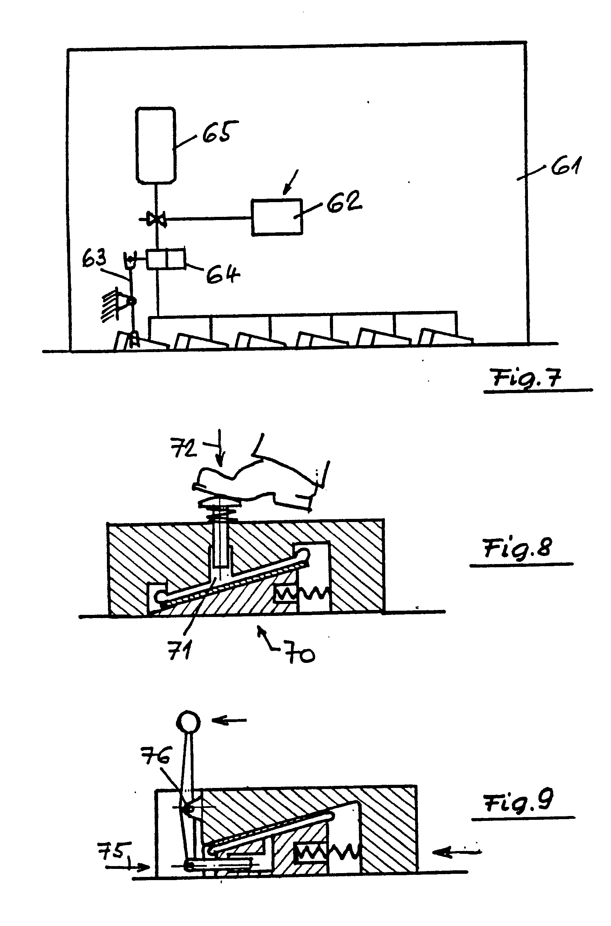

Fig. 5 zeigt die Mehrfach-Anordnung der Keilschubelemente in einem Balken 50 als abwechselnd betätigbare Systeme 51 für die Vorschubrichtung 52, insbesondere für eine kontinuierliche Vorschubbewegung.

Fig. 6 zeigt eine Fig. 5 ähnliche Anordnung der Keilschubelemente, jedoch wahlweise für beide Vorschubrichtungen.

Fig. 7 zeigt als Beispiel eine Keilschubreihe 60 in einer senkrechten Betonplatte 61 als Schutzraumtüre oder als ein sich durch einen Feuersensor 62 ausgelöst öffnender oder schliessender Wandteil. Die Steuerung kann durch eine Rückkoppelung 63 der Keilbewegung über ein Ventil 64 und die Speisung durch einen Druckspeicher oder eine Druckgasflasche 65 (z .B Luft oder $CO_2$) erfolgen.

Solche Einrichtungen bieten neue Möglichkeiten als autonom funktionsfähige Sicherheitssysteme.

Fig. 8 zeigt ein Ausführungsbeispiel eines Schubkeilantriebes 70 mit hydraulischer Betätigung 71 im geschlossenen System, bewegt durch die Übersetzung einer Fusskraft 72. Diese Ausführungsart ermöglicht, mit einem oder mehreren Schubkeilen Lasten mit wenig Aufwand und feinfühlig zu bewegen. Auch geschlossene Systeme können als Vorschubeinrichtung mit einem Gegenlager anstatt einer Last verwendet werden. Anstatt mit Fussdruck können die Primärkolben von Hand - z .B. mit Handhebel - oder durch rotierende oder alternierende Antriebe über eine Kurbelwelle oder Kurven angetrieben werden.

Fig. 9 zeigt das Ansetzen einer Kraft in der Schubrichtung zur Erzeugung einer komplexen Hebe-Schub-Funktion, mit Hilfe einer Hebelbetätigung. Die Reaktion der Kolbenkraft 75 wirkt hier zusätzlich über den Drehpunkt 76 als Schubkraft (vgl. P4, Fig. 3).

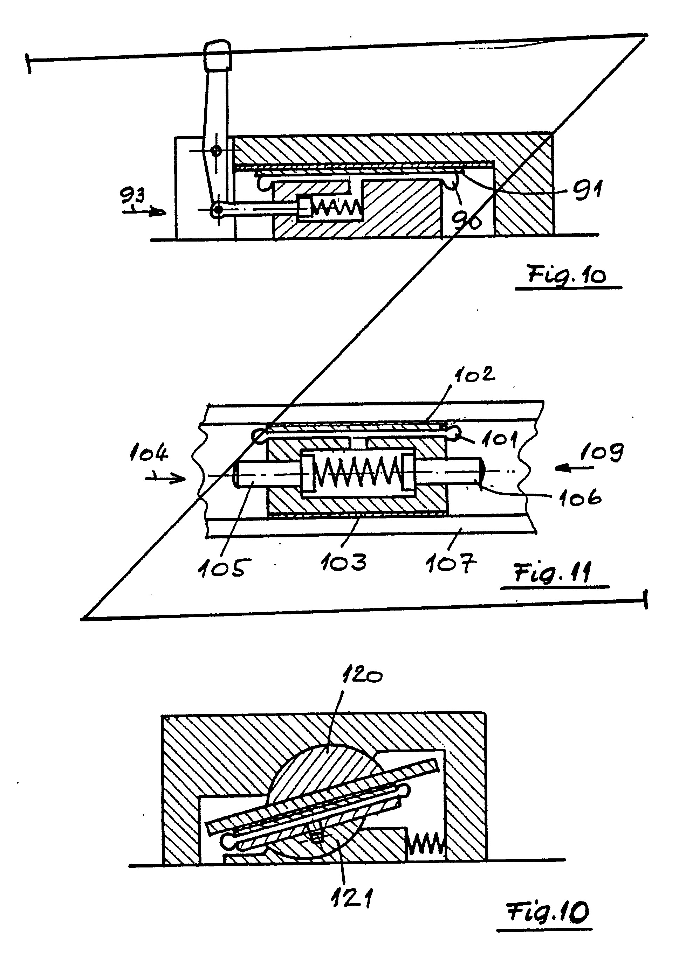

Fig. 10 zeigt eine Keilschubeinrichtung mit verstellbarem Keilwinkel. Die Verstellung bzw. Einstellung des Winkels erfolgt über die zwei segmentförmigen Stützen 120, 121, deren Fixierung gegen die aus dem Keilschub resultierenden Verstellkräfte nicht dargestellt ist.

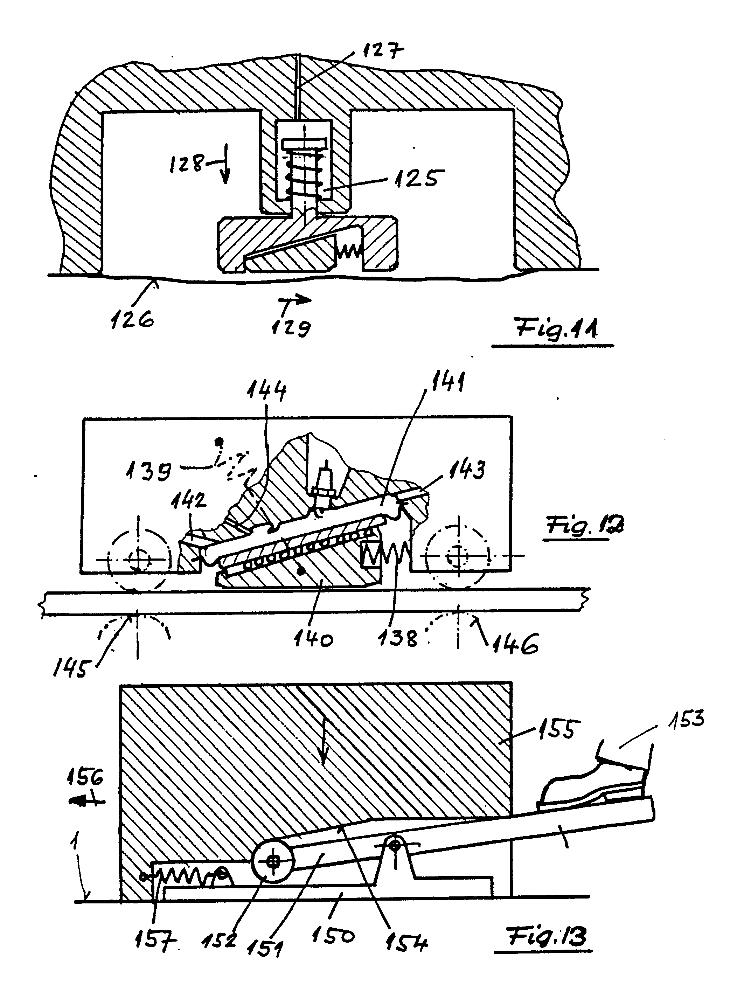

Fig. 11 zeigt einen hydraulischen höhenverstellbaren Keilschubantrieb. Bevor der nach vorgehenden Darstellungen aufgebaute Keil betätigt wird, erfolgt eine hydraulische Füllung des vertikalen Arbeitszylinders 125, bis der Keilschubantrieb den Boden 126 erreicht. Danach wird der Füllkanal 127 abgesperrt und der Keilschubvorgang kann angesteuert werden. Bei unebener Bodenfläche werden beide Hubbewegungen 128, 129 zyklisch und vorzugsweise in Folgeschaltung wiederholt.

Fig. 12 zeigt einen Keilschubantrieb mit einer Verbrennungszelle als Druckmediumerzeuger in schematischer Darstellung. Der, beispielsweise über Federn 138 und 139 zurückgestellte und angehobene Keil 140 verkleinert den flachen Verbrennungsraum 141 auf ein konstruktiv vorbestimmtes Mass. In diesem Hubzustand wird komprimierte Luft oder Gasgemisch bei einer Öffnung 142 eingelassen und die Brennzelle - solange ein Auslass 143 offen bleibt - durchgespült. Danach werden beide Öffnungen 142, 143 durch nicht dargestellte Organe, wie Steuerschieber oder Ventile, geschlossen und das Gasgemisch zur Explosion gebracht. Insofern nur Frischluft zugeführt wurde, kann durch eine weitere Düse 144 der Treibstoff eingespritzt werden. Die Steuerung der Verbrennungszelle erfolgt ausserhalb der Zelle. Der Steuervorgang kann durch externe Mittel gesteuert werden. Es ist aber ebenfalls möglich, mit der Zelle den Kompressionsraum eines konventionellen 2-Takt-Motors oder Freikolbenmotors synchron zu koppeln. In einem solchen Fall bildet die den Keil angetriebene Membrane oder Kolben einen beweglichen Teil des Verbrennungsraumes. Diese Antriebsart als Impulsantrieb bringt besondere Vorteile bei schnellen Fahrobjekten. Dementsprechend kann eine rollende Lagerung der Last, wie angedeutet, vorgesehen werden. Insofern die Anpresskraft des Keiles durch die getragene Last nicht ausreicht, wird eine Gegenlagerung 145, 146 vorgesehen.

Fig. 13 zeigt eine mechanische Version des Keilschubantriebes, bei dem an einer Bodenplatte 150 ein gelenkig gelagerter Hebel 151 über eine Rolle 152 auf eine bezüglich Belastungsrichtung der Gravitation 153 geneigte Fläche 154 drückt und die Verschiebung der Last 155 in Richtung 156 bewirkt. Die Betätigung des Hebels 151 kann durch Fuss- oder Handkraft oder mit technischen Mitteln erfolgen. Die Feder 157 bringt die Bodenplatte 150 nach erfolgtem Schub bei entlastetem Hebel (kleinere Reibung der Bodenplatte) in die gezeichnete Ausgangslage zurück.

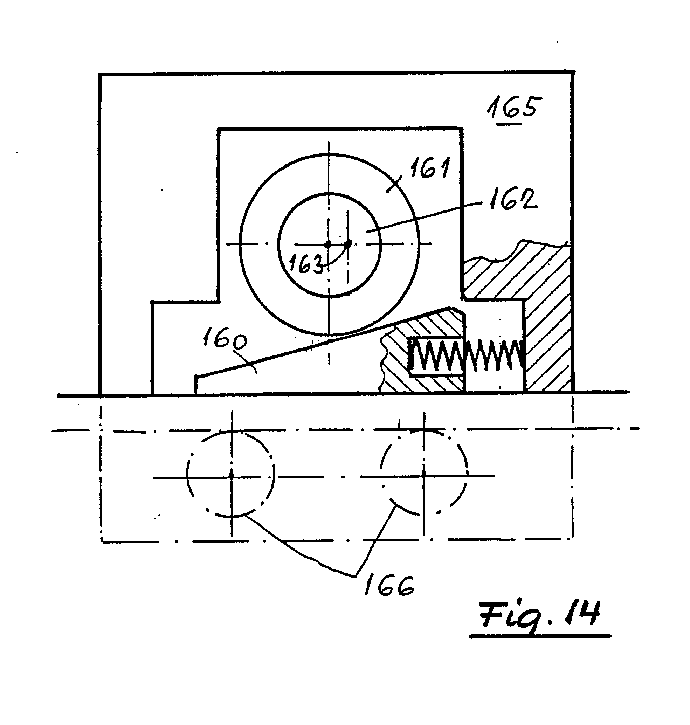

Fig. 14 zeigt einen Keilschubantrieb mit einem Keil 160 und einer auf einem Exzenterbolzen 162 gelagerten Rolle 161. Der Antrieb erfolgt um eine Achse mit dem Mittelpunkt 163. Dieser Exzenterantrieb des Keiles kann beispielsweise über einen Getriebemotor erfolgen, welcher entweder mit einer Last 165 oder mit einem Gegenlager 166 fest verbunden ist.

Bei solchen Antrieben übernimmt der Keil den sinusförmigen Bewegungscharakter des Exzenterantriebes. Um eine höhere Gleichmässigkeit der Bewegung zu erlangen, werden solche Keiltriebe mehrfach und phasenverschoben angeordnet (vgl. Mehrphasenstrom).

Die Vorteile dieser Schub-, insbesondere der Keilschubantriebe sind mannigfaltig. Sie vereinbaren in sich die Lagerung und den Antrieb von Lasten. Sie ermöglichen praktisch unbegrenzt grosse Lasten ohne mechanische Lagerprobleme an minderwertigen Oberflächen zu fahren.

Die Keile haben eine fläche Bodenauflage an einer frei bestimmbaren Fläche. Dieser Gegensatz zu Rollen und Räder, welche stets die Probleme der Kraftkonzentration an die aufliegende Mantellinie mit sich bringen, ermöglicht beim Keilschub beliebige Lasten, wie Dämme, Brücken, Häuser, Sicherheitswände, Antiterror-Betonblöcke, Kuppeln von Observatorien etc. mit äusserst geringem Aufwand, praktisch ohne Mechanik auf bzw. an gewöhnlichen Betonlaufflächen, aber auch auf bzw. an Bodenbelag, Teppich, Sand oder anderem Aehnlichem zu bewegen. Dadurch entsteht einerseits die Chance, manches aus schwerem Beton zu bauen, wo vorher eine Beweglichkeit mit konventionellen Mitteln ad absurdum geführt hätte. Ebenfalls ergibt es eine Neubelebung der Architektur und neue Lösungen für Sicherheitssysteme, auch unter Wasser.

Durch Keilschub bewegbare Lasten "laufen nicht davon", wenn eine Bodenneigung besteht. Sie sind ebenfalls unempfindlich gegen "kurzwellige" Laufflächen-Unebenheiten.

Die Schubkeilantriebe sind sehr kompakt mit hoher Tragkraft. Ein Beispiel:

Bei einer Keilschubanordnung nach Fig. 5 mit ca. 60 % aktiver Zellenfläche im horizontalen Querschnitt kann bei ca. 30 bar Mediumdruck (ca. 2000 kg/dm² bewegt werden. Dies entspricht etwa 80 m Wandhöhe aus vollem Beton. Die Keilschubantriebe können Räder, Rollen, Raupen, u.a. ersetzen, meist bei einem Bruchteil der Kosten. Sie können die annähernd waagrechte Bewegung, notigenfalls auch Rotation und Lagerung, von Grossbaggern, Tunnel-Bohrmaschinen, Bergbau-Maschinen, Container-Systemen, Kranen, bewegbaren Sockelteilen für Grossanlagen, Unterwassersperren, Schleusen, aber auch Hangartoren, Radarantennen, Solarkollektoren bewirken.

Impulsantriebe, wie Fig. 12 zeigt, bieten die Grundsatzausführungen für neue Fahrzeugantriebe. Hydraulische und mechanische Keilschubantriebe, wie in Fig. 8, 9, 10 und 13 gezeigt, ermöglichen insbesondere die temporäre Bewegung von Lasten an damit ausgerüsteten Paletten. Sie sind sowohl integrierbar, als auch als mobile Hilfsgeräte anwendbar.

In der Folge werden Anwendungsbeispiele praktischer Vorrichtungen mit vorwiegend pneumatischer Energiezuführung, zum schwingenden Antrieb, beispielsweise von Feilen, Sägen, Schab- und Schneidapparaten, Schwingschleifern, Nähmaschinen, schwingenden Reinigungsapparaten, Sieben, Rosten, Zuführ- und Sortiervibratoren, sowie zum schlagenden Antrieb, beispielsweise für Vorrichtungen zum Nageln, Heften, Nieten, Stempeln, Markieren, für Schlagwerkzeuge allgemein, wie auch zum Einrammen von Pfählen beschrieben.

Dabei liegt die Besonderheit in einem keilförmigen bewegten Hauptkörper dessen Bewegung beispielsweise über einen auf die Keilflanke wirkenden Kurzhub-Krafterzeuger, wie Membranenzelle, der Keilneigung entsprechend übersetzt, erfolgt.

Fig. 15 zeigt einen keilförmigen Schwingkörper 171 im Gehäuse 172 derart gelagert, dass bei der Zuführung des Druckmediums in die Folienzelle 173 der Schwingkörper 171 gegen Feder 174, über Druckplatte 175 und Lager 176, in Richtung 177 bewegt wird und nach Entspannen der Folienzelle 173, durch Feder 174 wieder zurückgestellt wird. Als Hubbegrenzung dient Anschlag 178.

Die Ergänzung oder Umstellung des schwingenden Antriebes zum schlagenden Antrieb kann über die hier hebelförmig dargestellte Arretierung erfolgen. Diese ermöglicht die Bewegung des Schwingkörpers 171 erst nach dem pneumatischen Vorspann der Folienzelle 173, beispielsweise über Hebel 180, gegen Feder 181 freizugeben, wonach die im Ausgangsvolumen der Folienzelle gespeicherte potentielle Energie, gegen Feder 174 in kinetische Energie umgewandelt wird. Die Rückholbewegung erfolgt bei entspannter Folienzelle durch die Feder 174 Das bewegte Werkzeug ist mit 182 angedeutet.

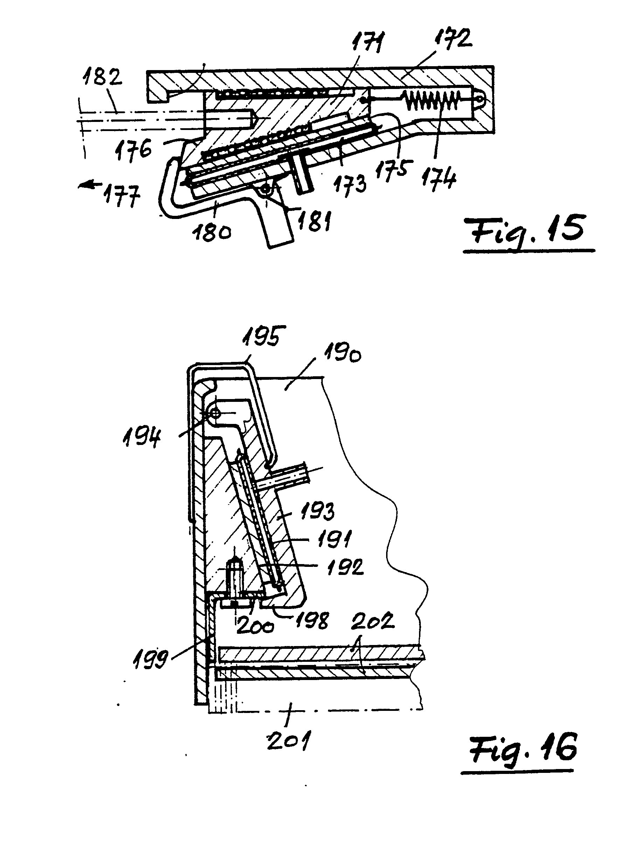

Fig. 16 zeigt ein Ausführungsbeispiel als Heftapparat, bei dem die im Gehäuseteil 190 der Kurzhub-Krafterzeuger 191 (Beispiel: Folienzelle) und der Druckplatte 192 am Hebel 193, um Achse 194 schwenkbar angeordnet ist. Der Hebel ist über Feder 195 und Lager 196 an den keilförmigen Schwingkörper (Schlagkörper) angepresst. Die pneumatische Vorspannung wird gegen Anschlag 198 aufgebaut, bis die steigende Zellenkraft den Hebel 193 gegen Feder 195 anhebt und die Arretierung 198 auslöst, wonach der Schlag erfolgt. Die Funktionsteile des Heftapparates sind der Stössel 199 der gleichzeitig die Arretierungskante 200 bildet. Schematisch dargestellt sind die Heftklammern 201, sowie deren Führung 202. Die Rückstellung des Schlagkörpers kann mit Feder, wie bei Fig. 15, oder durch einen Vorhub beim Auslösevorgang erfolgen. Die bei Fig. 16 dargestellte Gleitlagerung kann durch Metall/Metall oder Teflon/Metall-Kombinationen ausgeführt werden. Bei der Ausführung nach Fig. 16 könnte der Schwingkörper aus mit Schmierstoff getränktem Sintermetall sein, mit Gegenflächen aus Stahl.

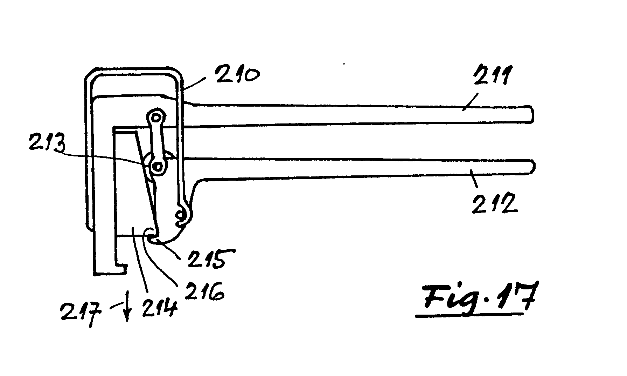

Fig. 17 stellt eine handbetätigte Schlagvorrichtung dar. Das Spannen gegen Feder 210 erfolgt durch das Zusammendrücken der Hebel 211 und 212, wie bei einer gewöhnlichen Zange. Während des Spannvorganges wird Rolle 213 auf die Keilflanke des Schwingkörpers 214 gepresst und die hakenförmige Arretierung 215 öffnet sich. Nach Überspringen der Arretierkante 216 beschleunigt die in der Feder während des Spannens gespeicherte mechanische Energie den Schwingkörper in Richtung 217. Die Führung des Spannhebels 212 sichert Gelenkarm 218.

Die besonderen Vorteile der dargestellten Vorrichtungen sind die wirtschaftliche Herstellung und das geringe Eigengewicht. Letzteres ermöglicht eine wesentlich bessere Handlichkeit bei Handwerkzeugen.

Anstatt der dargestellten Folienzellen können ebenfalls Membranenzylinder wie auch nur mechanische Hebelbetätigung verwendet werden.

Die Fig. 18 - 37 zeigen Materialförderungen mit dem sog. H-STEP-System. Es können, je nach Anwendungsart, zwei Funktionsarten zur Verwendung kommen:

Gleitschritt-Module zur schrittweisen oder kontinuierlichen Bewegung von Lasten, sowie

Impulsantriebe zur Bewegung von Lasten durch Kurzimpulse an Rollbahnen u.ä.

H-STEP-Einbaumodule für Gleitschritt-Förderbahnen ermöglichen aufliegende Werkstücke, Schalen, Paletten schrittweise oder kontinuierlich ein-, zwei- wie auch dreidimensional ununterbrochen oder start/stopgesteuert mit variabler Vorschubgeschwindigkeit und wenn nötig, reversierbar zu bewegen.

Gleitschritt-Förderbahnen bestehen aus einzelnen Fördermodulen oder aus Förderbalken, sowie deren Kombinationen. (Fig. 18)

Das H-STEP-Gleitschritt-Fördermodul ist in die Lastauflageebene versenkt derart eingebaut, dass der pneumatisch oder hydraulisch bewegte Keil zuerst einen Teil der Last übernimmt und folgend um die Keilhublänge verschiebt. Bei der Entspannung des Keiles wird die bewegte Last voll auf die stehende Auflageebene abgesetzt und er Keil durch eine Feder auf die Ausgangsposition zurückgestellt. (Fig. 19)

Gleitschritt-Förderbalken beinhalten normalerweise mindestens zwei simultan gesteuerte Antriebsmodule. Sie bilden beliebig erweiterbare, kombinierbare und nach Bedarf umstellbare Förderbahnen. Sie können ebenfalls zur programmierten Selektierung und Zuführung des Fördergutes verwendet werden. Die Förderbahnen können integrierte Wiege-, Bearbeitungsstationen oder Schleusen enthalten.

Weitere Vorteile sind:

Leichte Reinigung, sterilisierbar, ex-sicher. Ermöglicht die Förderung auch in nassem, staubigem, erhitztem Bereich, in entsprechender Ausführung sogar unter Flüssigkeit.

Die Physik der Gleitschritt-Förderung.

Wenn man eine Last auf eine waagrechte Fläche legt, so wird die zur Verschiebung notwendige Kraft

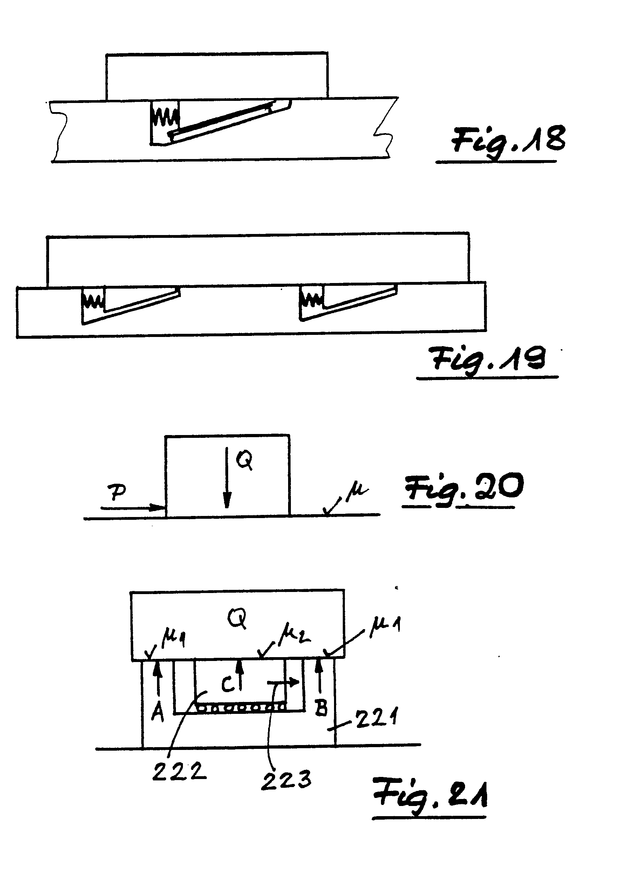

$P = Q \cdot \mu$ betragen. (Fig. 20)

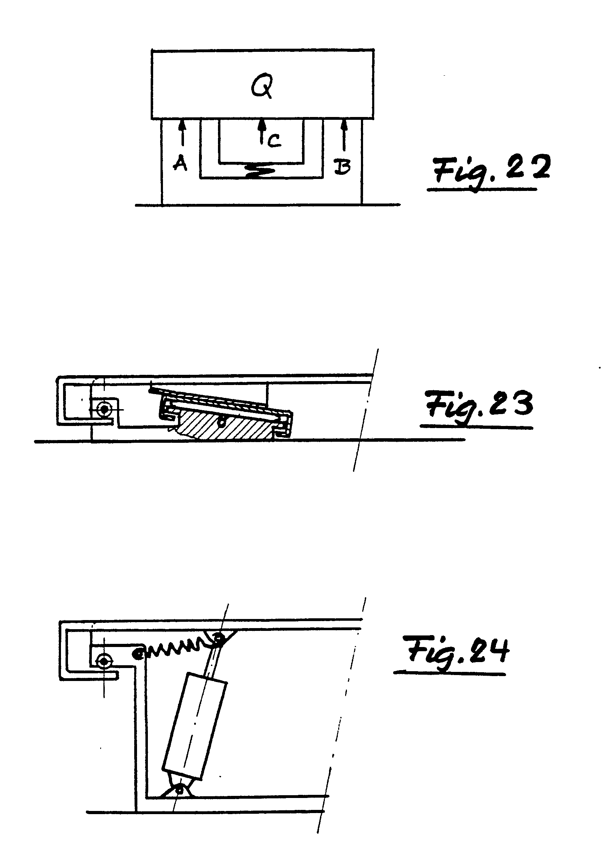

Wenn die Last Q auf zwei Flächen mit gleich grosser Kraft, bei gleichem Reibungskoeffizient (Fig. 21), d.h.

$$Q = A + B + C$$

$$\frac{Q}{2} = A + B = C$$

so entsteht an beiden Auflagekörpem 221 und 222 der selbe Reibungswiderstand und beim Bewegen des Auflagekörpers 222 in Richtung 223 bleibt unbestimmt, ob und wie weit die Last mitbewegt wird. Hier entsteht also ein indifferenter Gleitzustand.

Um ein Mitbewegen der Last mit Auflagekörper 222 zu sichern (Fig. 22), hat man grundsätzlich zwei Möglichkeiten, wie:

a)   die Reibungskoeffizienten im Sinne $\mu_1 < \mu_2$ zu verändern.
b)   das Verhältnis der Auflagefläche im Sinne $C > A + B$ durch eine zusätzliche Hebekraft pneumatisch, hydraulisch oder durch Federelement zu verändern.
c)   die Kombination von a und b.

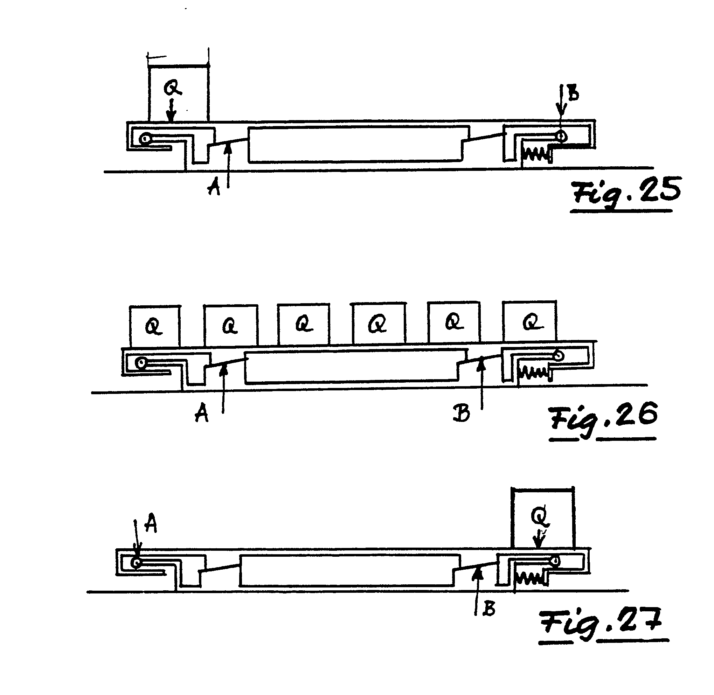

Die Konstruktionsart der Gleitschritt-Förderbahnmodule basiert auf dem aktiven Keil oder auf des sen Ersatzkonstruktion, mit einem zur Vorschubrichtung schräggestellten Zylinder mit Vorspanneinrichtung. Diese zwei Varianten zeigen die Figuren 23 und 24.

Die Dimensionierung der Gleitschritt-Fördermodule:

Die Fördermodule werden je nach Balkenanordnung, Belastungszustand und momentaner Lage der Last, variabel belastet. Deshalb müssen grundsätzlich drei extreme Belastungsfälle, gemäss den Fig. 25 - 27, überprüft werden. Die eingebauten Gleitschrittmodule mussen in jedem Fall die Ausführung des zweidimensionalen Hubvorganges korrekt erfüllen.

Die fortgesetzte, schrittweise Förderung eines oder mehrerer Lastkörper mit dem vorgehend beschriebenen System, kann in Form von Einzelelementen oder als Förderbahn erfolgen, insofern diese so konstruiert sind, dass in der cyclischen Wiederholung die folgenden Bedingungen erfüllt werden:

beim Vorschubschritt:

$$C \cdot \mu_2 > (A + B) \cdot \mu_1$$

und beim Rückhub des Auflagekörpers 222:

$$C \cdot \mu_2 < (A + B) \cdot \mu_1$$

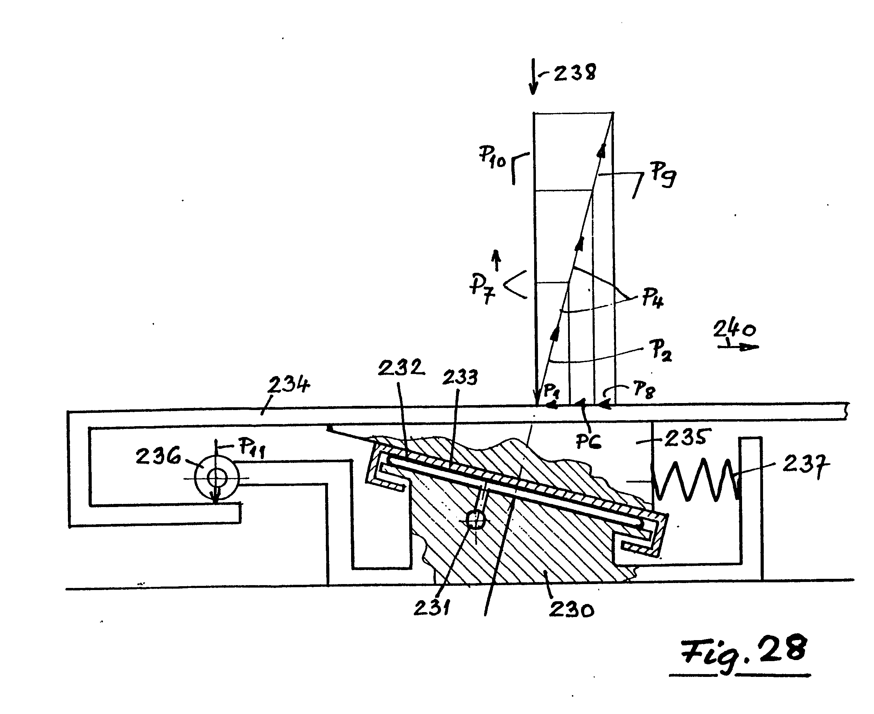

Die beim Gleitschrittmodul wirkenden Kräfte zeigt Fig. 28. Symbolisch dargestellt ist ein Gleitschrittmodul eines Förderbalkens als Ausführungsbeispiel mit dem aktiven Keil 230, dessen Hub beispielsweise durch die über Kanal 231 gesteuerte und gespiesene Kraftzelle 232 erfolgt und über Druckplatte 233 die Gleitlagerfläche des mit dem Balken 234 verbundenen Gegenkeiles 235 wirkt. Als Krafterzeuger können auch Membranzylinder o.ä. verwendet werden. Die Führungsrollen 236 sind so angebaut, dass der Balken 234 (s. Fig. 21, 222) beim Vorwärtshub gegenüber des beidseitigen, festen Auflagekörpers geringfügig erhöht (s. Fig. 21, 221) angehoben werden kann. Die Feder 237 dient zur Vorspannkraft sowie für Rückholfunktion nach beendetem Vorschubschritt.

Der Vorschubvorgang verläuft wie folgt:

Durch das über Kanal 231 zugeführte Druckmedium übt die Kraftzelle 232 über die Gleitlagerung auf Gegenkeil 235 einen steigenden Druck aus.

Wenn sich an der Förderbahn eine Last 238 befindet, so führt der Balken nur einen Vertikalhub bis zur Lastauflage aus, übernimmt immer mehr Lastanteil und es entsteht der Zustand:

$$C \cdot \mu_1 > (A + B) \cdot \mu_1 \text{ (s. Fig. 22)}$$

Bevor ein Vorschub stattfindet muss $P_Z$ die der Federspannung $P_1$ entsprechende Grösse, also $P_2$ erreichen.

Ebenfalls vor der Vorschubbewegung muss der Reibungswiderstand $P_5$ am Keillager, bzw. dessen waagrechte Komponente $P_6$, übernommen werden, also $P_2$ muss auf die Grösse von $P_4$ steigen, womit die Lastübernahmekraft auf $P_7$ steigt. In dieser Phase entspricht die Belastungsphase:

$$C = \frac{Q - P_7}{2} + P_7 \text{ und } A + B = \frac{Q - P_7}{2}$$

In dieser Phase erfolgt vor dem Vorschub noch eine weitere Erhöhung von $P_Z$ um den Reibungswiderstand $P_8 = (A + B) \cdot \mu_1$ zu überwinden. Dazu ist eine weitere Erhöhung von $P_2$ auf $P_9$ notwendig, wobei sich während der Lastübernahme auf C die Teillast $(A + B)$ weiterhin verringert und der Förderbalken sich nun mit der Last in Richtung 240 verschiebt.

Die Führungsrollen 236 treten dann in Funktion, wenn $Q < P_{10}$. Die Rolle 236 stützt in diesem Fall den angehobenen Balken 234 mit einer Kraft $P_{11}$, die in der Wirkungslinie von $Q$ die Grösse $P_{11} = P_{10} - Q$ hätte.

Bei der Rückwärtsbewegung des Förderbalkens wird die Kraftzelle entspannt, die Last wird auf die festen Auflagekörper abgesetzt und der Förderbalken durch Feder 237 auf die Ausgangslage zurückgeschoben.

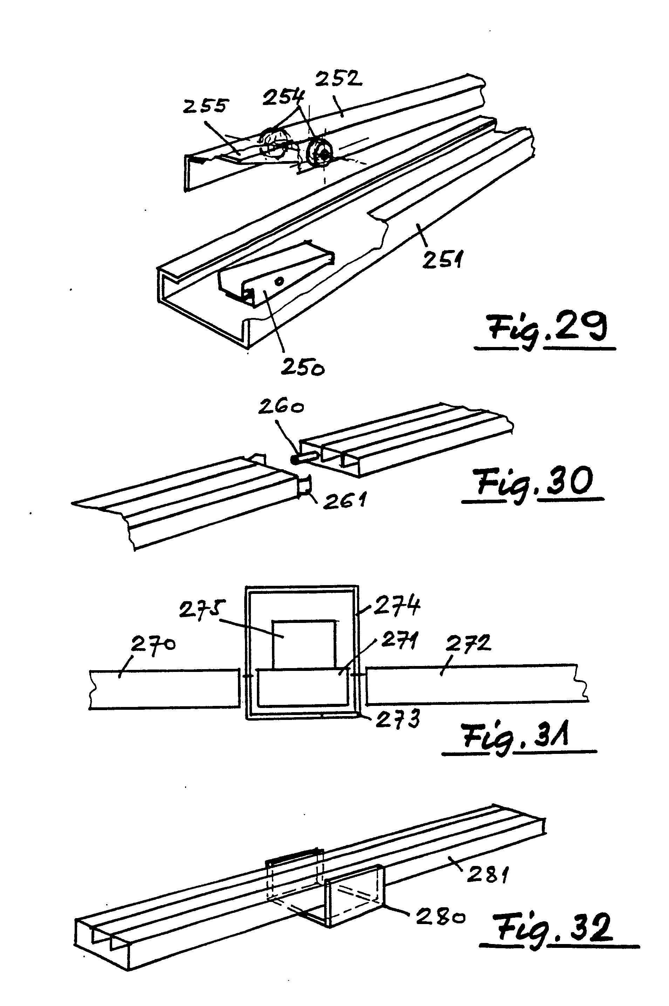

Die folgenden Figuren 29 - 37 zeigen weitere Ausführungsbeispiele.

Fig. 29 zeigt ein Ausführungsbeispiel einer zweckmässigen Konstruktionsart für den Aufbau einer Gleitschrittmodultechnik, bei der die aktiven Keile 250 in einem U-förmigen Profil 251 befestigt sind. Der Förderbalken 252 trägt den hier durch die Achsen 253 der Rollen 254 befestigten Gegenkeil 255. Die Anschlagfläche der Rollen bildet die Innenseite des Profils 251. Die Rückholfeder ist nicht dargestellt.

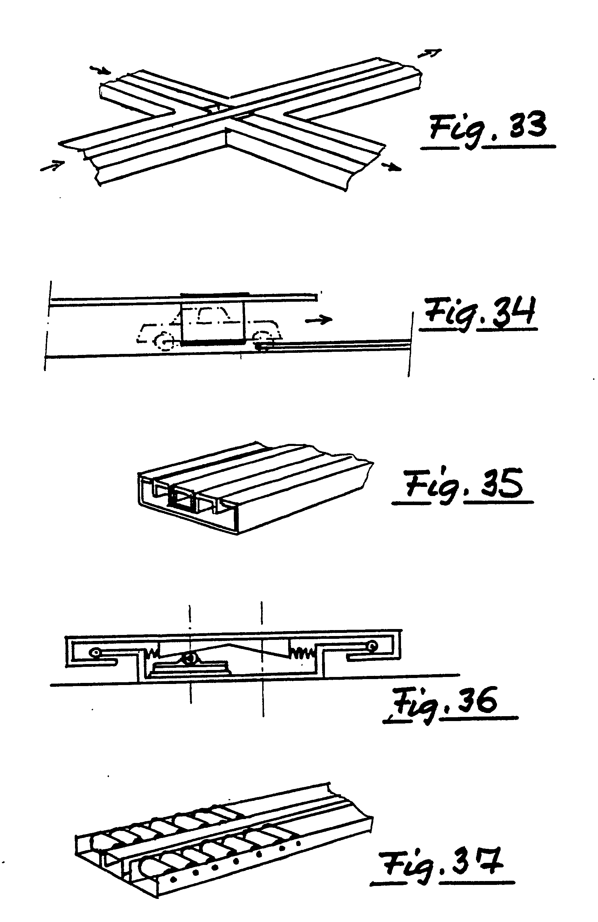

Fig. 30 zeigt schematisch die Verlängerbarkeit der Balkenmodule durch Steckkupplung 260 und Zentrieranschlüsse 261.

Fig. 31 zeigt die mögliche Trennung der Förderstrasse 270, 271, 272, um eine Operation am Fördergut auszuführen. Das Bild zeigt Abschlussteile 273, 274.

Fig. 32 zeigt einen bügelförmigen Teil 280 um das Fördergut von der Förderbahn 281 für eine Operation, z .B. zum Wiegen, abzuheben.

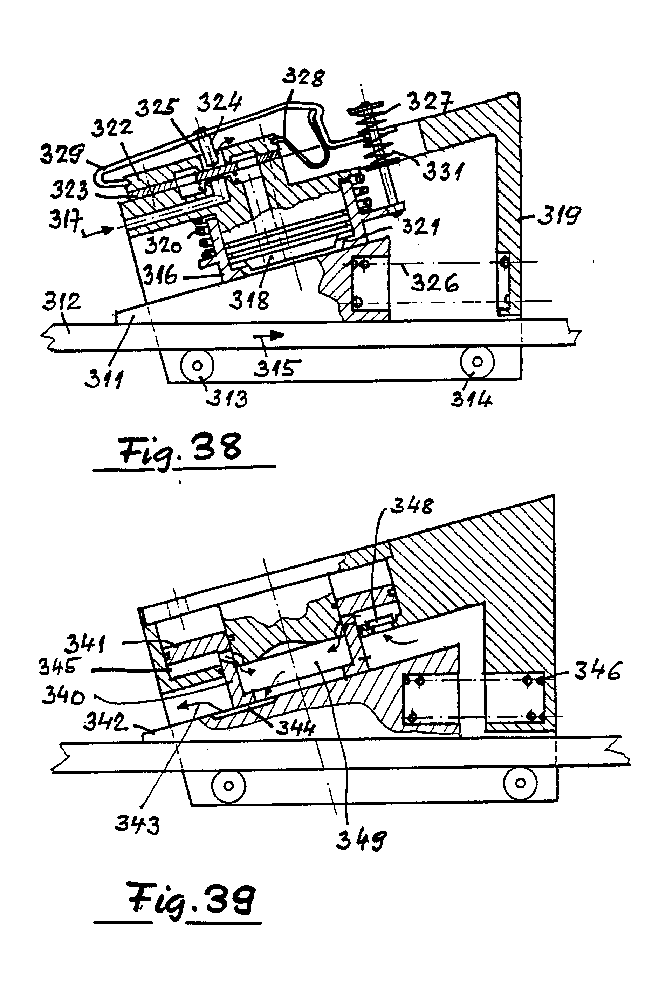

Fig. 33 zeigt eine Kreuzung der Förderbahnen um bestimmte Teile seitlich auszuscheiden.

Fig. 34 zeigt die Übernahme einer hängenden Last von der Gleitförderbahn auf eine darunter liegende Gleitförderbahn.

Fig. 35 zeigt eine Gegentakt-Gleitförderbahn für kontinuierliche Materialbewegung.

Fig. 36 zeigt schematisch ein Gleitschrittmodul bei dem die relative Versetzung des Doppelkeiles 300 zum Krafterzeuger 301 die Wahl der Vorschubrichtung ermöglicht.

Fig. 37 zeigt eine Impulsförderbahn mit Rollen (oder Kugelrollen) insbesondere für schnelle Stückgutförderung.

Die Steuerung der Schrittfolge bei H-STEP-Gleitschritt-Förderbahnen und Fördermodulen kann auf verschiedene Arten erfolgen, durch:

a) Rückkoppelung der Vorschubbewegung auf ein bistabiles oder bistabil gesteuertes Ventil
b) astabilen Multivibrator mit fester oder veränderbarer Frequenz, vorzugsweise mit Start/Stop-Steuerung
c) Mikroprozessor oder Computer.

Die Vielfalt der Bauarten, Modul-Kombinationen und Steuerungs-Möglichkeiten mit der logischen Koppelbarkeit von Kontrollvorgängen und Fremdoperationen, ermöglichen gänzlich neuartige Konzepte, insbesondere beim Aufbau von komplexen Fertigungsstrassen, deren Materialbewegung zwischen Stillstand und Maximal-Vorschubgeschwindigkeit zentral gesteuert und bei auftreten von Störungen gestoppt werden kann.

Die ruhenden Auflagekörper (Fig. 21, A, B, Fig. 29, 251) können als Auflage mit hoher Präzision als Teile einer Vorrichtung zur Messung, Verformung, Montage o.ä. dienen, woraus der integrierte Förderbalken nach beendeter Operation die Teile weiterfördert.

Es können ebenfalls die vorgeschobenen Teile durch Anschlag oder Niederhalter oder Vakuum festgehalten und wieder freigegeben werden.

Es handelt sich bei den Beispielen gemäss den Fig. 38 - 62 um Antriebe mit einem aktiven Keil als oscillierendes Wandlerelement einer neuartigen Digitalmechanik zur Portionierung der mechanischen Arbeit und Anwendung als Impulsantrieb von zu bewegenden Massen.

Fig. 38 zeigt einen Motor mit Keil 311, auf Schubkörper 312 wirkend, gestützt durch Rollen 313, 314. Die Schubkraft in Richtung 315 wird beispielsweise mittels Hohlkolbens 316 und durch die Wirkung des über Kanal 317 oscillierend zugeführten Druckmediums erzeugt. Der Führungskolben 318 ist hier mit dem Gehäuse 319 fest verbunden. Die Feder 320 dient zur geringfügigen Anpressung des Hohlkolbens, dessen Dichtwirkung durch den Mediumdruck beaufschlagten Innenrand 321 unterstützt wird. Die Figur zeigt ebenfalls ein Beispiel der mechanischen Rückkoppelung. Diese kann grundsätzlich von der Hubbewegung des Krafterzeugers - hier der Arbeitszylinder - von der Bewegung des Keiles, von anderen synchron bewegten Teilen oder von einer, beispielsweise in Gegentakt gekoppelten Motoreneinheit ähnlicher Art, erfolgen.

Das vorliegende Beispiel zeigt ein von Kolben 316 bistabil gesteuertes Membranenventil. Die gleichzeitig als Dichtung zwischen Gehäuse 319 und Deckel 322 eingespannte Membrane 323, schliesst durch die Anpresswirkung des Zapfens 324 den Druckmediumeinlass 317, oder lässt die Membrane frei um die Auslassöffnung 325 durch die Wirkung des eingelassenen Druckmediums zu dichten. Die Figur zeigt diese Einlassphase beim Beginn der Vorschubphase, wonach der Keil 311, gestützt auf Schubkörper 312, gegen Feder 326 vorgeschoben wird.

Die Rückkoppelung der Kolbenbewegung erfolgt über Feder 327 und durch das Umkippen des durch Feder 328 gespannten Hebels 329, wodurch der Zapfen 324 die Einlassöffnung 330 schlagartig schliesst und den Auslass 325 öffnet. Die Rückkoppelung für die nächste Vorschubphase erfolgt über Feder 331.

Rückkoppelungen dieser Art, in Verbindung mit Kolben oder Kraftzellen betätigten Keilen, ermöglichen die bewegte Masse sehr gering zu halten, wodurch eine verhältnismässig hohe Hubfrequenz erreicht werden kann, wie sie insbesondere bei oscillierenden Werkzeugbewegungen Vorteile bietet.

Diese letztere Anwendung entspricht einer Ausführung, bei der der Schubkörper nicht fortgesetzt vorgeschoben, sondern mit Keil 311 fest verbunden ist.

Fig. 39 zeigt die schematische Darstellung eines 2-Takt-Keilmotors, als Ausführungsbeispiel mit Hohlkolben

11

340 als Differentialkolben, mit einem ringförmigen Ladekolben 341 und dem Keil 342, gleichzeitig als Steuerschieber für die Auspuffsteuerung 343.

Eine Gemischvorbereitung oder Brennstoffeinspritzvorrichtung und die Zündeinrichtung sind nicht dargestellt.

Das Bild zeigt die beendete Vorschubphase mit offenem Auspuffkanal und den Spülvorgang, über die Schieberöffnung 344, aus dem Kompressionsraum 345. Der Rücklauf des Keiles durch Feder 346 bewirkt die Kompression im Verbrennungsraum 349 und das Nachsaugen der Frischluft (oder Gemisches) über die hier als Ventil dargestellte Öffnung 348.

Um die Reibungsverluste während des Kompressionsvorganges am Schubkörper zu mindern, kann der Keil während dieser Phase federnd entlastet werden. (s. auch Fig. 57)

Fig. 40 zeigt in schematischer Darstellung einen Verbrennungsmotor mit zwei simultan wirkenden und symmetrisch angeordneten Keilen 350, 351, beaufschlagt über Kolben 352, 353. Die relative Vorschubbewegung erfolgt zwischen Gehäuseteil 354 und Führungsteil 355 mit den gegenüber stehenden Andruckflächen 356, 357. Die übrigen Führungsteile sind nicht dargestellt. Der Ansaugvorgang erfolgt durch Feder 358, beispielsweise über eine nicht dargestellte Ventilklappe und der Auspuff über Kanal 359.

Das Bild zeigt den Anfang der Verbrennungsphase.

Fig. 41 zeigt einen Motor für Druckgas- (oder Druckluft-) Speisung. Der über Feder 360 gespannte Keil 361 anliegend an Schubkörper 362, presst den Hohlkolben 363 mit einem daran befindlichen Anschlagteil 364 gegen das Einlassventil 365, worauf das Druckmedium in den Zylinderraum strömt.

Die Vorschubbewegung erfolgt während der Expansionsphase des Druckmediums, welches in der Hubendphase über die Auspufföffnung 366 ins Freie strömt. Hier wirkt also der Keil wie bereits bei Fig. 39 auch als Steuerschieber.

Fig. 42 zeigt in schematischer Darstellung die Koppelung der Funktionsteile bei einem, mit dem Keil 370 mechanisch über Exzenterantrieb 371 gekoppelten Verbrennungsmotor 372. Die zur konstruktiv beeinflussbaren Glättung der Sinuscharakteristik des Kurbeltriebes dienende Druckfeder 373, im Pleuelteil 374, bewegt über den mittels Hebel 375 geführten Gelenkschlitten 376, den Keil 370 mit dem reibungsschlüssig gekoppelten Vorschubkörper 377, gegen die Feder 378.

Fig. 43 zeigt einen Verbrennungsmotor 380 mit einem synchron gekoppelten Kompressorteil 381 welcher, je nach Lage des Drehschiebers 382 - wie dargestellt - über ein Druckgaspolster 383, den Kolben 384 und damit den Keil 385 synchron bewegt. Bei um 90° verdrehtem Drehschieber wird die über Ventil 386 angesaugte Luft über Rückschlagventil 387 in den Druckspeicher 388 gefördert, um mit der gespeicherten Druckluft den Keil über Steuerung 389 zu bewegen.

Fig. 44 stellt eine Vorrichtung dar, welche über den aktiven Keil 390, mittels thermohydraulischem Energiewandler, Vorschubbewegungen ausführen und/oder die thermohydraulische Umwandlung zur Füllung eines Speichers oder für andere Verbraucher steuern kann. An dem auf Schiene 391 als hängender Schlitten dargestellte Tragkörper 392, befinden sich zwei Behältersysteme 393, 394 aus mehreren Kammern. Die Kammern 395 und 396 und Kanal 397 sind mit einer Flüssigkeit gefüllt, deren Wärmeausdehnungskoeffizient möglichst hoch ist. (Beispielsweise Paraffinöl). Die gut entlüftete Flüssigkeitsfüllung und deren temperaturproportionale Volumenausdehnung wird auf den Kolben 398 und auf den Keil 390 übertragen. Wenn der Wärmezufluss 399 über Wärmestrahlung, beispielsweise Sonnenstrahlen, erfolgt, so kann durch die Bewegung des Keiles ein Blendensystem 400 mitbewegt werden, wodurch der Wärmeeingang unterbrochen wird. Dadurch entsteht ein Schwingungskreis, dessen Frequenz durch die thermische Trägheit des Systems und durch die erreichbare $\Delta T$ Grösse bestimmt wird.

Das Bild zeigt das zweite Behältersystem 394 zur simultanen Förderung von hydraulischem Druckmedium. Die Tatsache, dass sich die geeigneten Füllmedien für die Verdrängungsarbeit mit den Elastomeren der Dichtungen von Arbeitsgeräten meistens nicht gut vertragen, ist es empfehlenswert, den Pumpvorgang über Mediumwandler, beispielsweise Trennbalg 401, auf ein zweites hydraulisches Medium zu übertragen.

Eine gleichgerichtete Flüssigkeitsförderung des zweiten Mediums entsteht bei der Oscillation des Balges 401 durch die Rückschlagventile 402, 403.

Fig. 45 zeigt eine Fig. 42 ähnliche Antriebseinheit, in anderer Bauform und mit zwei in Gegentakt wirkenden Keilen 411 und 412. Durch die rotierende Welle eines Verbrennungs- oder Elektromotors, direkt oder über Getriebe (nicht dargestellt) wie eine Exzenterwelle 413 angetrieben, welche einen daran drehend gelagerten Schwenkkopf 414 mit drei Rollen trägt. Die Rollen werden während der Drehung der Welle abwechselnd an die, durch Feder 415, 416 vorgespannten Keile 411 und 412 gepresst, welche ebenfalls abwechselnd und durch Reibungsschluss, die Vorschubbewegung an die Innenwände des Schubkörpers 417 übertragen. Die entstehenden Belastungsänderungen in der Querebene können durch einen im Schubkörper abgestützten Schlitten 418 aufgenommen werden.

Die Vorschubbewegung entsteht aus den steigenden Flanken von zwei phasenverschobenen Sinuslinien, entsprechend deren Phasenverschiebung 180° - 2α beträgt.

Eine gleichförmige Vorschubbewegung entsteht durch die Massenträgheit des vorgeschobenen Teiles und über die Freilaufeigenschaften der Keilantriebe. Eine Glättung des Vorschubvorganges kann, beispielsweise durch eine elastisch dämpfende Hülse 419, um das Exzenterlager und/oder ähnlicher Aufbau des Schwenkkopfes erfolgen. Ein Fig. 45 ähnlicher, aber mit von aussen nach innen gespannten Keilen, aufgebauter Antrieb kann durch die sinngemässe Umkehrung der Konstruktion erfolgen.

Fig. 46 zeigt schematisch dargestellt eine solche Anordnung, bei der die Keile 420 und 421 vom exzenterangetriebenen Schwenkkopf 422 nach innen, gegen den Vorschubkörper 423 angepasst werden, woran ebenfalls der Schlitten 424 geführt werden kann.

Fig. 47 zeigt ebenfalls ein Beispiel einer exzenterangetriebenen Vorrichtung, bestehend aus einem Schwenkkopf 430 mit zwei Rollen, welche eine aus den Keilen 431 und 432 gebildete Vorschubplatte 433 bewegt und mit Schlitten 434 in Schubkörper 435 geführt wird.

Die Vorschubrichtung wird mit der federnden Vorspannung 436 oder 437 bestimmt. Die Vorspannung 436 bringt den Keil 431 zur Wirkung, wogegen eine Umstellung auf die Vorspannrichtung 437 den Keil 432 zur Wirkung bringt. Die Vertiefung 438 ermöglicht bei exzenterangetriebenen Keilen eine Druckentlastung des Keiles beim unteren Totpunkt des Exzenters.

Fig. 48 zeigt eine mögliche Keilform beim Antrieb von Rondellen durch Tangentialkraft. Das Beispiel zeigt einen exzenterangetriebenen Schwenkkopf 440 an einem, mit dem Zentrum der Rondelle, oder mit Gegenlager 442 verbundenen Teil, auf einen gekrümmten Keil 443 wirkend.

Fig. 49 zeigt den Antrieb von zylindrischen Körpern mit verhältnismässig kleinem Durchmesser. Der beispielsweise hydrostatisch angetriebene Keil 450 liegt an zwei Rotationskörpern 451, 452 an, wovon mindestens einer mit einem anzutreibenden Teil wirkverbunden ist. Durch die Einbauneigung der Rückholfeder 454 kann das Verhältnis, der Kraftvektoren zur Leerung der Kraftzelle 455 und zur Rückstellung des Keiles 456 vorbestimmt werden. Ein Rücktrieb des Keiles kann erreicht werden, wenn ein Rücklaufanschlag 458 des Keiles auf die Gegenseite der Rollen 451 und 452 sich stützt.

Fig. 50 zeigt die Koppelung eines auf Rollen 460 und 461 aufliegenden und beispielsweise hydrostatisch über Krafterzeugerzelle 462 bewegten Keils 463, gekoppelt mit einem im Gehäuseteil 464 gelagerten Zahnrad 465.

Eine solche Zahnradkoppelung kann zur Gegentaktsynchronisation eines zweiten Keiles 466 oder zur rutschfreien Schwenkbetätigung einer Achse, als Drehantrieb oder zur Kontrolle oder Anzeige der Keilposition dienen.

Fig. 51 zeigt die Gegentaktkoppelung von zwei Antriebskeilen 470, 471, durch einen Hebel 472 und Koppelstangen 473, 474. Das Ausführungsbeispiel zeigt schematisch die Umsteuerung der Kelle durch einen Steuerschieber 475, mittels kulissenförmigen Anschlägen, betätigt durch die Hebelverlängerung 476.

Fig. 52 zeigt eine Antriebsvorrichtung mit einem, zwischen Führungsrollen 480, 481, 482 und 483 geführten Keil 484 gesteuert über Kanal 485 durch die Kraftzelle 486.

Das Besondere bei diesem Ausführungsbeispiel ist, dass das Koppeln des Keiles mit dem Vorschubkörper 487 nicht durch Anpressen des Keilkörpers sondern durch eine mit der Krafterzeugerzelle simultan gefüllten Koppelzelle 488, mit Reibbelag 489 erfolgt. Eine ähnliche Koppelzelle kann auch bei den anderen Ausführungsbeispielen angewendet werden.

Fig. 53 zeigt eine Krafterzeugerzelle 490 als Keil, deren Koppelfläche 491 beispielsweise durch ein Federstahlblatt 492 gehalten ist, welche Feder durch Vorspannung auch die Leerung der Zelle in der Auspuffphase unterstützen kann. Ein zum Kleinstvolumen der Zelle abgestimmter Füllkörper 493 ermöglicht den volumetrischen Wirkungsgrad zu verbessern.

Solche vollelastischen Kraftzellen bieten besondere Vorteile bei kleinen Vorschubeinheiten mit hoher Hubfrequenz durch die Möglichkeit, die bewegte Masse stark zu reduzieren. Sie ermöglichen auch, mit geringem Aufwand die belastungsabhängige und automatische Keilwinkelumstellung zu verwirklichen. Dazu dient beim vorliegenden Beispiel die durch Feder 494 belastete Stützklappe 495.

Fig. 54 zeigt eine Anordnung bei der die Koppelzelle 500 auch die Antriebsfunktion übernimmt, in dem der geneigte Teil 501 des Keiles 502 direkt gelagert wird 503, 504 und auf die Füllung der Zelle 500 die reibungsschlüssige Koppelung mit dem Schubkörper 505 und folgend dessen Vorschub erfolgt.

Fig. 55 zeigt eine Fig. 45 ähnliche Antriebsvorrichtung 510, deren Vorschubrichtung durch die Umstellung des Doppelkeiles 511 erfolgen kann. Das umstellen kann über Stange 512 und Federpaket 513 erfolgen, in dem man die Stange 512 gegen die gewünschte Vorschubrichtung verschiebt und arretiert. Die zur Vorschubrichtung gegensinnig Verschiebung des Steuervorganges (hier Stange 512) ermöglicht bei deren bistabiler Arretierung einen zwischen federnden Anschlägen, sich automatisch umsteuernden Antrieb, mit einfachen Mitteln aufzubauen.

Fig. 56 zeigt einen hydrostatisch 520 angetriebenen Keil 521 und einen Haftbremsteil 522, mit ebenfalls hydrostatischer Betätigung. Eine solche Konstruktion ermöglicht, die Keilschritte in beliebiger Phase zu stoppen. Diese Kombination, Vorschub und Haftbremse, ermöglicht neuartige Positionierungen digitaler Art aufzubauen. Dazu wird ein, beispielsweise incrementaler Raster 523 mit dem angetriebenen Teil bzw. Schubkörper 524 verbunden und beispielsweise über Lichtschranke 525 abgetastet. Beim durch Bewegung quittierten Zählerstand eines Impulszählers, tritt die Haftbremse in Funktion. Diese Art von Positionierungen können, insbesondere bei Produktionsmaschinen, den Aufbau dadurch wesentlich zu vereinfachen, dass, anstatt des üblichen Aufbaus von Koordinatentischen, das Werkstück selbst angetrieben werden kann und eine damit verbundene Positionssteuerung - die häufig oft nur aus einer optischen Tabulatorsteuerung besteht - die Haftbremse beispielsweise als Niederhalter auslöst.

Fig. 57 zeigt eine Möglichkeit, einen Antriebskeil während der Rücklaufphase von der Reibfläche abzuheben. Der Keil 530 mit einer hydrostatischen Betätigung 531 wird In der Vorschubphase mit den Reibflächen 532, 533 an den Schubkörper 534 gepresst und in der Rücklaufphase durch die Rolle 535 und die darauf wirkende Feder 536 leicht angehoben oder mindestens entlastet.

Für das einwandfreie Funktionieren muss die Bedingung

$P_R < \frac{P_F}{\sin\alpha}$   erfüllt werden,

wenn $P_R$ = an die Rolle wirkende Federkraft $\alpha$ = Keilwinkel und $P_F$ die Kraft der Feder 537 angibt.

Fig. 58 zeigt einen mit dem Schleifer des Schieberpotentiometers 540 gekoppelten und hydrostatisch betätigten Keil 541, an Rollen 542, 543 derart geführt, dass die jeweilige Keilposition in ein wegproportionales elektrisches Analogsignal umgewandelt werden kann.

Eine solche Koppelung mit einem Wegmessgeber ohmischer, induktiver (Differentialtransformator) oder anderer Art, und Rückkoppelung auf den Mediumdruck der Keilbetätigung ermöglicht mit wenig Aufwand, den Aufbau von Kompensationssteuerungen beliebiger Grösse.

Die Anwendung eines digitalen Wegmessgebers ermöglicht die programmierbare Positionierung des Keiles.

Die Koppelung des Keiles mit einem Messtaster macht einen feinfühlig steuerbaren Tasterdruck und die analoge oder digitale Übertragung der Messergebnisse möglich.

Fig. 59 zeigt eine Möglichkeit der Synchronbetätigung von mehreren Keilen. Die hydrostatisch gefüllten Zellen 550 ,551 sowie 552 und 553 bilden je ein geschlossenes, hydromechanisches Übertragungssystem. Ihre Synchronisierung erfolgt über die gleichsinnige mechanische Koppelung 554 der aktiven Flächen, wie auch der Stützflächen 555. Eine gegensinnige Anordnung der Primärzellen 550 und 552 ergibt einen Gegentaktantrieb.

Fig. 60 zeigt die zwangsartige Führung einer Rollagerung 560 zwischen zwei zueinander relativ verschobenen Körpern 561 und 562 - wie dies bei Keillagern der Fall ist - durch mindestens einen Doppelhebel 563.

Fig. 61 zeigt die zwangsartige Führung eines Nadelkäfigs 570 mit eingebautem Zahnrad 571 und in die Lagerfläche 572 integrierte Zahnbahnen 573 (nur eine Seite dargestellt).

Fig. 60 zeigt die formschlüssige Ausbildung der Keil-Haftfläche 580 durch Rippen 581 Dies bringt bei gänzlich schlupffreien Präzisionsantrieben, beim Vorschub an geschmierten Flächen oder bei grossem Keilwinkel Vorteile.

Die dargestellten Ausführungsbeispiele umfassen ein ausserordentlich breites Anwendungsfeld.

Das direkte Abstützen des Mediumdruckes beim Hohlkolben (Fig. 38, 39, 41) ermöglicht grosse dynamische Kräfte mit geringer Reibung an den Berührungsflächen zwischen Kolben und Keil abzustützen.

Auf diese Weise können grosse und schnelle Einheiten, einzeln oder in beliebiger Anzahl als Antrieb für Strassen- und Schienenfahrzeuge, Schleuderantriebe als Flugzeug-Starthilfe, Rettungsgeräte, Gleitschrittantriebe für grosse Lasten sowie schlagend-oscillierende Geräte, wie Betonhammer, Vibrator und Rammer angewendet werden.

Die obigen Anwendungsgebiete gelten auch für die Darstellung von Fig. 40, 42, 43, 49, 52, 54, 57, 60, 61.

Impulsantriebe solcher Art können Düsentriebwerke als Startbeschleuniger ersetzen, mit dem besonderen Vorteil, dass kein Strahl ausgestossen wird.

Es bedarf lediglich eines auf dem Beschleunigungsweg der Reaktionskraft entsprechend verankerten Profilstabes.

Die voraussichtlich mit Normal-Brennstoff, wie Benzin, erreichbare Geschwindigkeit liegt bei etwa 150 m/sek (= 540 km/Std.) mit anderen Brennstoffen möglicherweise noch wesentlich höher.

Die Vorrichtung nach Fig. 44 zeigt die Möglichkeit, wie niederwertige Wärme direkt in mechanische Arbeit umgesetzt werden kann.

Die Rückkoppelung der Keilbewegung kann anstatt von Blenden, die Umstellung von Steuerklappen, Schiebern, Hahnen oder die Focusumlenkung von Spiegeln bewirken.

Die Antriebe nach Fig. 45, 46, 47, 55 sind insbesondere für Transport- und Servo-Systeme von Vorteil, wie automatische Lagereinrichtungen, Hängebahnen, Zuführsysteme, Transferstrassen, Türbetätigungen, Bewegung von Schlitten und Geräten an geraden oder gekrümmten Bahnen.

Für den Aufbau von NC-gesteuerten Produktions- und Messeinrichtungen, sowie Werkzeugmaschinen eignen sich besonders Ausführungen nach Fig. 56, 58.

## Patentansprüche

1. Vorrichtung zum Verschieben von Kräften bezüglich einer zur Führung dienenden Auflagefläche (1), insbesondere von Lasten (9, P, 155), bei welcher Vorrichtung eine zur Wirkungslinie der Kraft (9, P, 155) geneigte Fläche (3, 152) und ein Krafterzeuger vorgesehen sind, der eine zu dieser Fläche (3, 152) rechtwinklig wirkende Kraft ($P_Z$) erzeugt, woraus eine gegen die zu verschiebende Kraft (9, P, 155) wirkende und eine zur Auflagefläche (1) parallele Kraftkomponente entstehen, wobei mit der geneigten Fläche (3, 152) ein erstes formbeständiges Verschiebelagerungs- und -führungselement (4 bzw. 5; 152 bzw. 154) wirkverbunden ist, dadurch gekennzeichnet, dass ein zweites, direkt mit dem ersten zusammenwirkendes, formbeständiges Verschiebelagerungs- und -führungselement (5 bzw. 4, 154 bzw. 152) mit dem Krafterzeuger wirkverbunden ist.

2. Vorrichtung zum Verschieben eines Gegenstandes nach Anspruch 1, dadurch gekennzeichnet, dass der Krafterzeuger (7) zum Verringern der die Bewegung des Gegenstandes (9, P, 155, 165) hindernden Reibungskräfte $((A+B) \cdot \mu_2)$ durch Erzeugung einer Gegenkraftkomponente ($P_H$) der senkrecht zur Bewegungsrichtung des Gegenstandes (9, P, 155, 165) wirkenden Gegenkraftkomponente (P) dient, und dass Mittel vorgesehen sind, um den Gegenstand zu verschieben, z. B. Gleitflächen und Rollagerungen (4, 5, 152, 154, 161).

3. Vorrichtung nach Anspruch 1 oder 2, dadurch gekennzeichnet, dass der Krafterzeuger eine Membranzelle (7) oder ein Kolben-Zylinderaggregat oder eine mechanische Hubvorrichtung, z. B. einen Hebel (151) oder Exzenter (163) oder eine Kraft aus einem thermodynamischen oder thermohydraulischen Krafterzeuger umfasst. (Fig. 1, 2, 8, 12, 13, 14, 39, 40, 42, 43, 44, 45, 46, 47, 48).

4. Vorrichtung nach einem der Ansprüche 1 bis 3, dadurch gekennzeichnet, dass eine Verschiebelagerungs- und -führungsfläche (4) Bestandteil eines Keiles (21) bildet, welcher z. B. Träger des Krafterzeugers (20) ist. (Fig. 2).

5. Vorrichtung nach einem der Ansprüche 1 bis 4, dadurch gekennzeichnet, dass ein Keil vorgesehen ist, welcher einen sich, z. B. lastabhängig, verstellbaren Keilwinkel aufweist. (Fig. 12, 53).

6. Vorrichtung nach einem der Ansprüche 1 bis 5, dadurch gekennzeichnet, dass ein Keil vorgesehen ist, dessen Gleitfläche auswechselbar ist, und dass die Vorrichtung vorzugsweise eine an der Kraft bzw. der Last zur Befestigung vorgesehene Gegengleitfläche aufweist. (Fig. 1, 2).

7. Vorrichtung nach einem der Ansprüche 1 bis 6, dadurch gekennzeichnet, dass Nachschiebemittel, z. B. Federn (11), zum Nachschieben und/oder Vorspannen des Körpers, insbesondere eines Keils (2) in seine Arbeitslage vorgesehen sind. (Fig. 28).

8. Vorrichtung zum schwingenden oder schlagenden Antrieb eines anzutreibenden Teils, nach einem der Ansprüche 1 bis 7, gekennzeichnet durch einen keilförmigen Schwingkörper. (Fig. 15, 16, 17).

9. Vorrichtung nach einem der Ansprüche 1 bis 8, dadurch gekennzeichnet, dass der Körper, insbesondere ein Keil (342) als Steuerschieber für den Vorgang, z. B. für die Auspuff steuerung, ausgebildet ist. (Fig. 39, 41).

10. Vorrichtung nach einem der Ansprüche 1 bis 9, dadurch gekennzeichnet, dass der Körperantrieb (384) direkt mit einem oszillierenden Druckerzeuger (380) über eine geschlossene Druckmediumssäule (383) verbunden ist. (Fig. 43).

11. Vorrichtung nach einem der Ansprüche 1 bis 10, dadurch gekennzeichnet, dass der Körper, insbesondere Keil, formschlüssig, z. B. über Zähne, mit einem drehbaren Teil treibend verbunden ist. (Fig. 50).

12. Vorrichtung nach einem der Ansprüche 1 bis 11, dadurch gekennzeichnet, dass zwei Körper, insbesondere Keile (470, 471), zum alternativen Vorschubvorgang zwangsläufig miteinander verbunden sind. (Fig. 51).

13. Vorrichtung nach einem der Ansprüche 1 bis 12, dadurch gekennzeichnet, dass der Körper, insbesondere der Keil (484) und ein anzutreibender Teil (487), über eine Koppelvorrichtung (488) wirkverbindbar sind. (Fig. 54).

14. Vorrichtung nach einem der Ansprüche 1 bis 13, dadurch gekennzeichnet, dass eine Bremseinrichtung (522) vorgesehen ist, um eine ungewollte Bewegung des Antriebes zu verhüten. (Fig. 56).

15. Vorrichtung nach einem der Ansprüche 1 bis 14, dadurch gekennzeichnet, dass ein Lagemelder (525, 540) für die Kraft vorgesehen ist. (Fig. 56, 58).

16. Vorrichtung nach einem der Ansprüche 1 bis 15, dadurch gekennzeichnet, dass ein Lagerkörper (560, 570) vorgesehen ist, welcher zwangsweise geführt (563, 571, 573) ist. (Fig. 60, 61).

## Claims

1. A device for displacement of forces relative to a supporting surface (1) which serves for guidance, in particular of loads (9, P, 155), in which device a surface (3, 152) which is inclined with respect to the line of influence of the force (9, P, 155) and a force generator are provided, the latter generates force ($P_Z$) which acts at right angles to said surface (3, 152), wherefrom a force component which acts against the force (9, P, 155) which is to be displaced and a force component parallel to the supporting surface (1) arise, a first displacement bearing element and displacement guide element (4 or 5; 152 or 154) of stable shape being operatively connected to the inclined surface (3, 152), characterized in that a second displacement bearing element and displacement guide element (5 or 4, 154 or 152) of stable shape which cooperates directly with the first is operatively connected to the force generator.

2. A device for displacing an object according to Claim 1, characterised in that the force generator (7) serves to reduce the frictional forces $((A+B) \cdot \mu_2)$, which hinder the movement of the object (9, P, 155, 165) by producing a counter-force component ($P_H$) of the counter-force (P) which acts perpendicular to the direction of movement of the object (9, P, 155, 165) and that means are provided to facilitate displacement of the object, e.g. sliding surfaces and rolling bearing elements (4, 5, 152, 154, 161).

3. A device according to Claim 1 or 2, characterized in that the force generator comprices a membrane cell (7) or a cylinder-piston unit or a mechanical lifting device, e.g. a lever (151) or eccentric (163) or a force from a thermodynamic or thermohydraulic force producer. (Fig. 1, 2, 8, 12, 13, 14, 39, 40, 42, 43, 44, 45, 46, 47, 48).

4. A device according to one of Claims 1 to 3, characterised in that a displacement bearing surface and displacement guide surface (4) forms part of a wedge (21) which is e.g. a support for the force generator (20). (Fig. 2).

5. A device according to one of Claims 1 to 4, characterised in that a wedge is provided which has a wedge angle which is adjustable, e.g. dependent on the load. (Fig. 12, 53).

6. A device according to one of Claims 1 to 5, characterised in that a wedge is provided, the sliding surface of which can be exchanged, and that the device preferably has a complementary counter-sliding surface provided on the force or load. (Fig. 1, 2).

7. A device according to one of Claims 1 to 6, characterised in that pusher means, e.g. springs (11), are provided for pushing and/or pre-loading the member, in particular a wedge (2), into its operating position. (Fig. 28).

8. A device for the oscillating or striking drive of a part which is to be driven, according to one of Claims 1 to 7, characterized by a wedge-shaped oscillating member. (Fig. 15, 16, 17).

9. A device according to one of Claims 1 to 8, characterized in that the member, in particular a wedge (342), is designed as a control slider for a process, e.g. for exhaust control. (Fig. 39, 41).

10. A device according to one of Claims 1 to 9, characterized in that the member drive (384) is connected directly to an oscillating pressure generator (380) by a closed pressure medium column (383). (Fig. 43).

11. A device according to one of Claims 1 to 10, characterized in that the member, in particular a wedge, is drivingly connected in a positive manner, e.g. by teeth, to a rotatable part. (Fig. 50).

12. A device according to one of Claims 1 to 11, characterized in that two members, in particular wedges (470, 471), are positively connected together for alternative advancement. (Fig. 51).

13. A device according to one of Claims 1 to 12, characterized in that the member, in particular the wedge (484), and a part (487) which is to be driven can be operatively connected via a coupling device (488). (Fig. 54).

14. A device according to one of Claims 1 to 13, characterised in that a brake device (522) is provided to prevent unwanted movement of the drive. (Fig. 56).

15. A device according to one of Claims 1 to 14, characterised in that a position indicator (525, 540) for the force is provided. (Fig. 56, 58).

16. A device according to one of Claims 1 to 15, characterized in that a bearing body (560, 570) is provided which is compulsorily guided (563, 571, 573). (Fig. 60, 61).


**Revendications**

1. Dispositif pour translater des forces par rapport à une surface d'appui (1) ayant une fonction de guidage, en particulier pour déplacer des charges (9, P, 155), dispositif dans lequel sont prévus une surface (3, 152) inclinée par rapport à la ligne d'action de la force (9, P, 155) et un générateur d'énergie qui produit une force $(P_Z)$ s'exerçant dans une direction perpendiculaire à cette surface (3, 152) en développant ainsi une composante de force s'opposant à la force à translater (9, P, 155) et dirigée parallèlement à la surface d'appui (1), un premier élément indéformable (4 ou 5; 152 ou 154) de soutien et de guidage pour le mouvement de translation étant réuni par une liaison active à la surface inclinée (3, 152), caractérisé en ce qu'un deuxième élément indéformable (5 ou 4; 154 ou 152) de soutien et de guidage pour le mouvement de translation, coopérant directement avec le premier, est réuni par une liaison active au générateur d'énergie.

2. Dispositif selon la revendication 1, pour déplacer un objet en translation, caractérisé en ce que le générateur d'énergie (7) sert à réduire les forces de frottement $((A + B) \cdot \mu_2)$ entravant le mouvement de l'objet (9, P, 155, 165), en produisant une composante de force antagoniste $(P_H)$ de la composante de force antagoniste (P) qui agit perpendiculairement à la direction de déplacement de l'objet (9, P, 155, 165), et en ce que des moyens, comme par exemple des surfaces de glissement et des assises à rouleaux (4, 5, 152, 154, 161), sont prévus pour deplacer l'objet en translation.

3. Dispositif selon la revendication 1 ou 2, caractérisé en ce que le générateur d'énergie comprend une cellule à membrane (7) ou un ensemble à cylindre et piston ou un dispositif de levage mécanique, comme par exemple un levier (151) ou un excentrique (163) ou une force délivrée par un générateur d'énergie thermodynamique ou thermohydraulique. (Fig. 1, 2, 8, 12, 13, 14, 39, 40, 42, 43, 44, 45, 46, 47, 48).

4. Dispositif selon l'une des revendications 1 à 3, caractérisé en ce qu'une surface de soutien et de guidage (4) pour le mouvement de translation fait partie d'un coin (21) qui constitue par exemple un support pour le générateur d'énergie (20). (Fig. 2).

5. Dispositif selon l'une des revendications 1 à 4, caractérisé en ce qu'il est prévu un coin qui présente un angle d'inclinaison apte à se régler par exemple en fonction de la charge. (Fig. 12, 53).

6. Dispositif selon l'une des revendications 1 à 5, caractérisé en ce qu'il est prévu un coin dont la surface de glissement peut être remplacée, et en ce que le dispositif présente de préférence une contre-surface de glissement prévue pour être fixée, par rapport à la force ou sur la charge. (Fig. 1, 2).

7. Dispositif selon l'une des revendications 1 à 6, caractérisé en ce que des moyens de poussée, comme par exemple des ressorts (11), sont prévus pour pousser et/ou pré-contraindre le corps, notamment un coin (2), dans sa position de travail. (Fig. 28).

8. Dispositif selon l'une des revendications 1 à 7, pour assurer un entraînement oscillant ou flottant d'un élément à mettre en mouvement, caractérisé par un corps oscillant en forme de coin. (Fig. 15, 16, 17).

9. Dispositif selon l'une des revendications 1 à 8, caractérisé en ce que le corps, notamment un coin (342), est réalisé sous la forme d'un tiroir de commande pour le processus operatoire, par exemple pour la commande d'un échappement. (Fig. 39, 41).

10. Dispositif selon l'une des revendications 1 à 9, caractérisé en ce que l'organe d'actionnement (384) du corps est relié directement à un générateur de pression oscillant (380) par l'intermédiaire d'une colonne fermée de fluide sous pression (383). (Fig. 43).

11. Dispositif selon l'une des revendications 1 à 10, caractérisé en ce que le corps, notamment le coin, est relié cinématiquement de par la forme, et par exemple au moyen de dents, à une pièce rotative. (Fig. 50).

EP 0 155 236 B1

12. Dispositif selon l'une des revendications 1 à 11, caractérisé en ce que deux corps, notamment des coins (470, 471), sont réunis l'un à l'autre par une liaison imposant un processus d'avance alternatif. (Fig. 51).

13. Dispositif selon l'une des revendications 1 à 12, caractérisé en ce que le corps, notamment le coin (484), et une pièce à mettre en mouvement (487), sont reliés activement l'un a l'autre par un dispositif d'accouplement (488). (Fig. 54).

14. Dispositif selon l'une des revendications 1 à 13, caractérisé en ce qu'un dispositif de freinage (522) est prévu pour empêcher un mouvement intempestif de l'organe d'actionnement (Fig. 56).

15. Dispositif selon l'une des revendications 1 à 14, caractérisé en ce qu'il est prévu un indicateur de position (525, 540) pour la force (Fig. 56, 58).

16. Dispositif selon l'une des revendications 1 à 15, caractérisé en ce qu'il est prévu un corps formant assise (560, 570) qui est soumis à un guidage forcé (563, 571, 573). (Fig. 60, 61).

Fig. 1

Fig. 2

Fig. 3

EP 0 155 236 B1

_Fig.4_

_Fig.5_

_Fig.6_

65

62

61

63

64

Fig.7

72

71

70

Fig.8

76

75

Fig.9

Fig. 10

Fig. 11

Fig.10

127

128 →

125

126

129 →

*Fig.11*

144    141

139 →

143

142

*Fig. 12*

140    138    146

145

155    153

156

1

157  152  151  150  154    *Fig.13*

11

_Fig. 14_

Fig. 15

Fig. 16

Fig.17

*Fig. 18*

*Fig. 19*

*Fig. 20*

*Fig. 21*

*Fig. 22*

*Fig. 23*

*Fig. 24*

_Fig. 25_

_Fig. 26_

_Fig. 27_

Fig. 28

Fig.29

Fig.30

Fig.31

Fig.32

Fig. 33

Fig. 34

Fig. 35

Fig. 36

Fig. 37

Fig. 38

Fig. 39

357

354

353

355 356

358

359

352

350

_Fig.40_

365

363

366

361

360

362

364

_Fig.41_

273  375  371  372  274  370  377  376

*Fig. 42*

380  381  387  388  382  386  389  383  384  385

*Fig. 43*

Fig.44

Fig. 45

Fig. 46

Fig. 47

440

443 442

_Fig. 48_

450
451
458
452
454

_Fig. 49_

462
464
463
461
460
465 466

_Fig. 50_

475
476
473
470 472 474 471

_Fig. 51_

480
484
486
482
487
481
485
488   489
483

*Fig.52*

494
492
495
493
491   490

*Fig.53*

503
502
501
504
500
505

*Fig.54*

512   511

513

_Fig.55_

521   520

522

524

525   523   _Fig.56_

531

530   536

532   533

534   535

_Fig.57_

541    540

542    543

*Fig.58*

554    550    551

555

552    553

*Fig.59*

562

560

561

563

*Fig.60*

Fig. 61

Fig. 62